# EUROPÄISCHE PATENTSCHRIFT

(11) **EP 4 087 101 B1**
(45) Veröffentlichungstag und Bekanntmachung des Hinweises auf die Patenterteilung: **01.11.2023**
(21) Anmeldenummer: 22171078.3
(22) Anmeldetag: 02.05.2022
(51) Int. Cl.: H02K 35/02, F16F 1/02

(54) **ELEKTRODYNAMISCHER ENERGIEWANDLER**
ELECTRODYNAMIC ENERGY CONVERTER
CONVERTISSEUR ÉLECTRODYNAMIQUE D'ÉNERGIE

(30) Priorität: 30.04.2021 DE 102021111203
(43) Veröffentlichungstag der Anmeldung: 09.11.2022
(73) Patentinhaber: Uhl, Joachim, 51588 Nümbrecht (DE)
(72) Erfinder: KLEIN, Christoph, 35080 Bad Endbach (DE); SCHNEIDER, Jochen, 58313 Herdecke (DE); UHL, Joachim, 51588 Nümbrecht (DE)
(74) Vertreter: Lippert Stachow Patentanwälte Rechtsanwälte

(56) Entgegenhaltungen:
- EP-A1- 3 778 040
- WO-A1-2020/045470
- CN-A- 1 852 011
- JP-A- 2007 203 227
- US-A- 5 896 076
- US-A1- 2006 091 733
- US-A1- 2008 265 692
- US-A1- 2011 156 501
- US-A1- 2014 103 751
- US-A1- 2015 041 619

## Beschreibung

Die Erfindung betrifft einen elektrodynamischen Energiewandler zum Umwandeln von mechanischer Bewegungsenergie in elektrische Energie, umfassend ein Gehäuse, eine zum Gehäuse beweglich gelagerte Magnetanordnung zur Bereitstellung eines Magnetfeldes mit zumindest zwei koaxial und beabstandet zueinander ausgerichteten, axial magnetisierten Magneten, wobei die beiden Magnete stirnseitig gleichpolig zueinander angeordnet sind und zwischen den beabstandeten Magneten eine magnetische Poleinrichtung, umfassend ein magnetisch leitfähiges Material angeordnet ist, oder mit zumindest einem radial magnetisierten Magneten, der von einer zweigeteilten, axial ausgerichteten magnetischen Poleinrichtung räumlich umfasst wird, eine zum Gehäuse mittels einer Halteeinrichtung zur Magnetanordnung ortsfest angeordnete und von dem Magnetfeld der Magnetanordnung durchdrungene Spulenanordnung umfassend zumindest eine zylinderförmige und langgestreckte Induktionsspule, welche die Magnetanordnung zumindest abschnittsweise umgibt, und eine Lagereinrichtung zur Lagerung der zum Gehäuse beweglichen Magnetanordnung, die sowohl Federungs- und Dämpfungs- als auch Linearführungs-Funktionalität umfasst.

Derartige elektrodynamische Energiewandler werden dafür verwendet um Elektronikschaltungen, welche sich in einer Umgebung befinden, in welcher sehr lange Wartungsintervalle vorgegeben sind und die insbesondere energieautark betrieben werden, mit Energie zu versorgen. Beispiele für die Nutzung eines solchen Energiewandlers sind z.B. die Speisung von kabellosen Sensorsystemen oder Schaltungen die eine Leistungsaufnahme im Milliwatt-Bereich aufweisen. Die mechanische Energie liegt dabei beispielsweise in Form von Vibrations- (z.B. bei Bohrköpfen) oder Rotations- Bewegungen (z.B. bei Funk-Reifendrucksensoren) vor. Eine charakteristische Größe eines elektrodynamischen Energiewandlers ist die Effizienz der Energieumwandlung, welche sich durch das Verhältnis von Ausgangsleistung zu Baugröße in mW/cm³ angeben lässt.

Eine wesentliche Anforderung an die vom Energiewandler gespeiste Elektronik sind geringe elektrische Verbrauchsdaten, die durch den elektrodynamischen Energiewandler bereitgestellt werden müssen.

In der industriellen Praxis sind Vibrationen meist unerwünscht, daher sind praktisch vorkommende Vibrationswerte beim Betrieb von technischen Vorrichtungen bzw. Maschinen möglichst geringgehalten. Praktisch liegen übliche geringe Vibrationswerte bzw. Beschleunigungswerte im Bereich von etwa 10 bis 20 mg (0,0981 ... 0,1962 m/s2), wodurch ein hoher Wirkungsgrad bei der Energieumwandlung für einen reibungslosen Betrieb einer, von dem elektrodynamischen Energiewandler gespeisten elektronischen Schaltung zwingend notwendig ist. Dabei gibt der Wirkungsgrad an, wie viel der mechanischen Energie in elektrische Energie umgewandelt werden kann.

Das Entwicklungsziel für einen effizienten elektrodynamischen Energiewandler zur Energieversorgung von beispielsweise drahtlosen Funk-Sensoren ist die Umwandlung mechanischer Schwingungsenergie bei einer Beschleunigungsamplitude im Bereich von ca. 10 bis 20 mg in elektrische Energie mit einer Ausgangsleistung von etwa 250 µW bei einer Ausgangsspannung von 3,3V auf Basis eines möglichst wirkungsvollen Funktionsprinzips, das hierzu eine möglichst geringe Baugröße benötigt.

Die Funktionsweise des beschriebenen elektrodynamischen Energiewandlers basiert auf dem Tauchspulen-Wirkungsprinzip, das aufgrund der sehr guten magnetischen Kopplung schon seit vielen Jahren im Bereich der Audio-Technik (Lautsprecher, Mikrofone) angewendet wird (vgl. EP0861013 A1) und bei dem ein Permanent-Magnet mit magnetischem Rückschluss zum Einsatz kommt.

Das Funktionsprinzip des Permanentmagneten mit magnetischem Rückschluss ist auf dem Gebiet der elektrodynamischen Vibrations-Energiewandler insbesondere bekannt durch die Patentdokumente DE102010020668A1, US7569952B1, WO2008132423A1 und CN1852011A. Diese Schriften beschreiben eine gattungsbildende Anordnung der Dauermagneten, bei welcher sich gleichnamige Pole gegenüberstehen, um auf diesem Wege eine Verdrängung des magnetischen Flusses in den Bereich der Induktionsspule zu erreichen.

Herkömmliche elektrodynamische Energiewandler sind bezüglich ihrer Effizienz, Bauform bedingt, nicht optimiert.

Übliche elektronische Beschaltungen eines elektrodynamischen Energiewandlers sind unter anderem in den Patentdokumenten GB000002475497B und EP000001997210B1 beschrieben. Diese Schriften geben wieder, wie die elektrischen Ausgangswerte eines elektrodynamischen Energiewandlers entsprechend eines vorgegebenen Wertes konstant gehalten bzw. begrenzt werden können. Herkömmliche elektrodynamische Energiewandler nach dem Stand der Technik arbeiten insofern gemäß fest eingestellter Arbeitspunkte und Grenzwerte. Elektrodynamischer Energiewandler nach dem Stand der Technik sind aus den Dokumenten US2008/265692A1 und WO 2020/045470 A1 bekannt

Insofern liegt der vorliegenden Erfindung die Aufgabe zugrunde, herkömmliche elektrodynamische Energiewandler weiterzuentwickeln, wobei eine lange Betriebszeit des erfindungsgemäßen Energiewandlers und ein möglichst hoher Wirkungsgrad bei der Umwandlung von mechanischer Energie in elektrische Energie bereitgestellt wird.

Diese Aufgabe optimierter Energieumwandlung von mechanischer Vibrationsenergie in elektrische Energie wird vorrichtungsseitig durch einen erfindungsgemäßen elektrodynamischen Energiewandler erster Art mit den Merkmalen des Hauptanspruchs 1 gelöst. Dabei umfasst der erfindungsgemäße elektrodynamische Energiewandler zum Umwandeln von mechanischer Bewegungsenergie in elektrische Energie ein Gehäuse, eine zum Gehäuse beweglich gelagerte Magnetanordnung zur Bereitstellung eines Magnetfeldes mit zumindest zwei koaxial und beabstandet zueinander ausgerichteten Magneten, wobei die beiden Magnete stirnseitig gleichpolig zueinander angeordnet sind und zwischen den beabstandeten Magneten eine magnetische Poleinrichtung, umfassend ein magnetisch leitfähiges Material angeordnet ist, eine zum Gehäuse mittels einer Halteeinrichtung zur Magnetanordnung ortsfest angeordnete und von dem Magnetfeld der Magnetanordnung durchdrungene Spulenanordnung umfassend zumindest eine zylinderförmige und langgestreckte Induktionsspule, welche die Magnetanordnung zumindest abschnittsweise umgibt, und eine Lagereinrichtung zur Lagerung der zum Gehäuse beweglichen Magnetanordnung, die sowohl Federungs- und Dämpfungs- als auch Linearführungs-Funktionalität umfasst. Der erfindungsgemäße Energiewandler zeichnet sich dadurch aus, dass eine jeweilige Stirnfläche der beiden axial magnetisierten Magneten komplementär zu einer jeweils zugeordneten Stirnfläche der Poleinrichtung ausgebildet ist, derart, dass die Poleinrichtung und die Magneten luftspaltfrei im Bereich ihrer zugeordneten Stirnseiten aneinanderliegen, wobei die Poleinrichtung in einer Richtung parallel zu der Spulenachse die beiden axial magnetisierten Magneten umgreift zur Ankopplung der beiden Magneten an die Induktionsspule und zur Homogenisierung der magnetischen Flussdichte in der Induktionsspule, und wobei die Halteeinrichtung zumindest drei Befestigungsabschnitte zu deren Befestigung an das Gehäuse aufweist, die radial verlaufend außen zur Induktionsspule insbesondere hochkant angeordnete und jeweils um 120° versetzte Befestigungsstege umfassen, und die Lagereinrichtung zur Lagerung der zum Gehäuse beweglichen Magnetanordnung mindestens ein einlagiges oder doppellagiges planares Federelement umfasst, welches zwei oder mehr radial oder axial verlaufende Federarme aufweist zur Bereitstellung einer vorgegebenen Quersteifigkeit der Lagerung und eine elektronische Steuerungs- oder Regelungseinrichtung, im Folgenden kurz elektronische Steuerung oder Regelung, welche ausgebildet ist zur Steuerung oder Regelung der Längssteifigkeit der Kopplung zwischen Magnetanordnung und Gehäuse, insbesondere der Längssteifigkeit bezüglich der Auslenkung des schwingungsfähigen Systems bestehend aus Magnetanordnung, Federelement(en) und Gehäuse, wobei die Magnetanordnung über Federelement(e) an das Gehäuse gekoppelt ist.

Die obige Aufgabe optimierter Energieumwandlung von mechanischer Vibrationsenergie in elektrische Energie wird vorrichtungsseitig ferner durch einen erfindungsgemäßen elektrodynamischen Energiewandler zweiter Art mit den Merkmalen des nebengeordneten Anspruchs 2 gelöst. Dabei umfasst der erfindungsgemäße elektrodynamische Energiewandler zum Umwandeln von mechanischer Bewegungsenergie in elektrische Energie ein Gehäuse, eine zum Gehäuse beweglich gelagerte Magnetanordnung zur Bereitstellung eines Magnetfeldes mit einem radial magnetisierten Magneten mit axialen Stirnflächen, wobei der Magnet von einer mehrteiligen, koaxial zum zumindest einen Magneten ausgerichteten magnetischen Poleinrichtung aus magnetisch leitfähigem Material räumlich umfasst ist, eine zum Gehäuse mittels einer Halteeinrichtung ortsfest angeordnete und von dem Magnetfeld der Magnetanordnung durchdrungene Spulenanordnung umfassend zumindest eine zylinderförmige und langgestreckte Induktionsspule, welche die Magnetanordnung zumindest abschnittsweise umgibt, sowie eine Lagereinrichtung zur Lagerung der zum Gehäuse beweglich angeordneten Magnetanordnung, die sowohl Federungs- und Dämpfungs- als auch Linearführungs-Funktionalität aufweist. Der erfindungsgemäße elektrodynamische Energiewandler zeichnet sich dadurch aus, dass eine jeweilige axiale Stirnfläche des radial magnetisierten Magneten komplementär zu einer jeweils zugeordneten axialen Stirnfläche der Poleinrichtung ausgebildet ist, derart, dass zwischen der Poleinrichtung und dem Magneten kein Luftspalt besteht und die Poleinrichtung und der Magnet auf Kontakt aneinander anliegen, wobei die zweigeteilte Poleinrichtung den radial magnetisierten Magneten senkrecht zu der Spulenachse umgreift zur Ankopplung des radial magnetisierten Magneten an die Induktionsspule und zur Homogenisierung der magnetischen Flussdichte in der Induktionsspule, und wobei die Halteeinrichtung zumindest drei Befestigungsabschnitte zu deren Befestigung an das Gehäuse aufweist, die radial verlaufend außen zur Induktionsspule angeordnete und jeweils um 120° versetzte Befestigungsstege umfassen, und die Lagereinrichtung zur Lagerung der zum Gehäuse beweglichen Magnetanordnung mindestens zwei einlagige oder doppellagige planare Federelemente umfasst, welche jeweils zumindest zwei radial oder axial verlaufende Federarme und/oder durch Stege verbundene Teil-Federarme aufweist zur Bereitstellung einer vorgegebenen Quersteifigkeit der Lagerung und eine elektronische Steuerung oder Regelung, welche ausgebildet ist zur Einstellung oder Regelung der Längssteifigkeit in der Auslenkung des schwingungsfähigen Systems bestehend aus Magnetanordnung, Federelementen und Gehäuse, wobei die Magnetanordnung über Federelement(e) an das Gehäuse gekoppelt ist. Im Folgenden wird auf beide Ausführungsformen eines elektrodynamischen Energiewandlers erster und zweiter Art Bezug genommen, wenn von einem elektrodynamischen Energiewandler ohne Angabe der Art die Rede ist.

Ein hoher Wirkungsgrad des erfindungsgemäßen elektrodynamischen Energiewandlers erfordert unter anderem eine gute Ankopplung der Magnete bzw. des Magnets an die Induktionsspule, welche durch einen möglichst großen magnetischen Fluss und durch minimale Wege des Magnetfeldes durch die Luft festgelegt werden kann. Die erfindungsgemäße Anordnung der Magnete bzw. des Magnets, der Poleinrichtung und der Halteeinrichtung der Spule des elektrodynamischen Energiewandlers hat den Vorteil, dass immer ein der Bauform bedingter minimaler Luftspalt zwischen Poleinrichtung und Induktionsspule erreicht wird, sodass stets eine gute magnetische Ankopplung zwischen Magnetanordnung und Induktionsspule besteht. Dadurch wird der Wirkungsgrad des erfindungsgemäßen elektrodynamischen Energiewandlers gegenüber bekannten Energiewandlern aus dem Stand der Technik gesteigert, wodurch der erfindungsgemäße Energiewandler schon bei kleineren Auslenkungen, im Unterschied zu bekannten Energiewandlern, ausreichend elektrische Energie für eine vorgegebene Anwendung bereitstellen kann. Um den Wirkungsgrad zusätzlich weiter zu erhöhen, kann der Energiewandler bei geringer externer Anregung nur schwach bedämpft werden, sodass es zu einer großen Schwingungsamplitude kommt und bei starker Anregung stark bedämpft werden, sodass die maximal auftretende Schwingungsamplitude im Spezifikationsbereich bleibt und Federelemente mit einer niedrigen Federkonstante verwendet werden können. Ein weiterer Vorteil des erfindungsgemäßen elektrodynamischen Energiewandlers kann darin bestehen, dass die mechanische Belastung des elektrodynamischen Energiewandlers entsprechend der benötigten Ausgangsleistung mittels der elektronischen Steuerung oder Regelung auf ein Minimalmaß reduziert wird, um die Lebensdauer des Energiewandlers durch Verhindern von Schwingungsamplituden außerhalb eines vorgegebenen Spezifikationsbereichs mittels einer stärkeren Bedämpfung des Energiewandlers, zu erhöhen, oder auch kurzzeitig, durch eine schwächere Bedämpfung des Energiewandlers, auf ein hohes Maß gesteigert wird um eine zeitlich begrenzt benötigte hohe Ausgangsleistung bereitzustellen. Eine automatische adaptive Reaktion der Steuerung auf variable Betriebs- und Umgebungsbedingungen kann ein essentieller Bestandteil der erfindungsgemäßen Gestaltung des Energiewandlers darstellen um die Effizienz von System weiter zu steigern.

Weitere erfindungsgemäße Merkmale und Weiterbildungen der Erfindung sind in der allgemeinen Beschreibung, den Figuren, der Figurenbeschreibung sowie den Unteransprüchen angegeben.

In einer Ausführungsform des erfindungsgemäßen elektrodynamischen Energiewandlers erster Art können die zumindest zwei Magnete als axial gepolte Ring- oder Scheibenmagnete ausgebildet sein, insbesondere als baugleiche Magnete. Dabei sind möglichst große Magnete zu favorisieren, um den magnetischen Fluss durch die Induktionsspule so groß wie möglich zu gestalten.

Vorteilhafterweise kann die Poleinrichtung des elektrodynamischen Energiewandlers erster Art in der Form eines Polschuhs als magnetische Linse ausgebildet sein, welche eingerichtet ist zur Aufnahme von Magnetflüssen der zumindest zwei gegenpolig wirkenden und stirnseitig gleichpolig angeordneten Magnete zur Verstärkung, Homogenisierung und Umlenkung des Magnetflusses in eine Richtung senkrecht zur Achse der Induktionsspule und zur Einkopplung in die zumindest eine Induktionsspule. In der Ausführungsform eines elektrodynamischen Energiewandlers zweiter Art kann alternativ dazu ein einzelner ringförmiger und radial magnetisierter Magnet rechtwinklig an die Induktionsspule angebunden sein, wobei ein zweiteiliger magnetischer Polschuh den magnetischen Fluss bündelt, umlenkt und zu dem magnetischen Rückschluss ableitet.

Die Halteeinrichtung der Spulenanordnung kann hohlzylinderförmig ausgebildet sein, mit einem Innenzylinder und einem Außenzylinder, wobei die Induktionsspule in einem zwischen diesen gebildeten Hohlraum angeordnet ist, und wobei die Magnetanordnung zumindest abschnittsweise innerhalb des Innenzylinders der Halteeinrichtung angeordnet ist.

In einer vorteilhaften Ausführung des elektrodynamischen Energiewandlers erster Art kann die Poleinrichtung rotationssymmetrisch aufgebaut sein mit einer Mantelfläche und zwei, jeweils einem der Magnete zugewandten, axial beabstandeten Stirnseitenflächen, wobei senkrecht zur Rotationsachse die jeweilige Stirnseitenhöhe der Poleinrichtung ausgehend von der Rotationsachse mit radialem Abstand zu dieser Achse kontinuierlich zunimmt. Durch diese Bauform kann ein möglichst großer Anteil des magnetischen Flusses der zumindest zwei Magnete von der Poleinrichtung aufgenommen, verstärkt, homogenisiert und in eine Richtung senkrecht zur Achse der Induktionsspule umgelenkt werden.

In einer vorteilhaften Ausführung des elektrodynamischen Energiewandlers zweiter Art kann die zweiteilige Poleinrichtung rotationssymmetrisch aufgebaut sein, wobei beide Polteile symmetrisch um eine Rotationsachse und identisch aufgebaut sein können mit jeweiligen kreisförmigen axialen Stirnflächen, die unterschiedliche Radien aufweisen. Dabei können beide Polteile koaxial zueinander ausgerichtet und in Kontakt ihrer beiden axialen Stirnflächen mit geringerem Radius spaltfrei aneinanderliegen.

Der radial magnetisierte Magnet kann in Einbaulage koaxial zu den Polteilen angeordnet sein und eine axiale Durchführung aufweisen zur abschnittsweisen und luftspaltfreien Aufnahme der beiden Polteile. Dabei kann der radial magnetisierte Magnet von der Poleinrichtung an seinen axialen Stirnflächen umfasst sein, d. h. jeweils ein Polteil kann mit seiner Stirnseite mit größerem Radius an einer der beiden Stirnflächen des Magneten aufliegen und sich mit seiner axialen Erstreckung in Richtung zur Stirnseite mit kleinerem Radius in die Durchführung des Magneten hinein erstrecken, derart dass beide Polteile den Magneten axial einfassen und sich axial in dessen Durchführung bis auf den Kontakt der beiden Stirnflächen der beiden Polteile mit kleinerem Durchmesser erstrecken. Beide Polteile können so gestaltet sein, ein Schnitt senkrecht zur Rotationsachse über die gesamte axiale Erstreckung des jeweiligen Polteils kreisförmig ausgebildet ist, wobei die Kreisfläche ausgehend von der Stirnfläche mit kleinerem Radius in axialer Richtung zur Stirnfläche mit größerem Radius über eine vorgegebene axiale Erstreckung, insbesondere die gesamte axiale Erstreckung eines jeweiligen Polteils zunimmt, insbesondere kontinuierlich zunimmt. Wie schon dargestellt kann vorgesehen sein, dass die Durchführung bzw. die Grenzfläche der Durchführung des Magneten komplementär ausgebildet ist um ein spaltfreies Aneinanderliegen der Polteile der Poleinrichtung am Magneten zu gewährleisten. Durch diese Bauform kann ein möglichst großer Anteil des magnetischen Flusses des radial magnetisierten Magneten von der Poleinrichtung aufgenommen, verstärkt und homogenisiert werden.

Zur Bereitstellung eines magnetischen Rückschlusses kann die Magnetanordnung des elektromagnetischen Energiewandlers einen geschlossenen Topf umfassen, welcher einen Deckelabschnitt, einen Bodenabschnitt und einen Mantelabschnitt jeweils bestehend aus einem ferromagnetischen Material aufweist, wobei der Topf die Magnete, die zumindest eine Induktionsspule und die Poleinrichtung vollständig aufnimmt und allein durch zumindest drei insbesondere hochkant angeordnete Befestigungsstege zum Halten der Induktionsspule lokal durchbrochen wird. Dabei können die Befestigungsstege radial außerhalb des magnetischen Topfes in Befestigungssegmente übergehen. Der als Hohlzylinder ausgebildete Grundkörper der Halteeinrichtung, dessen Befestigungsstege sowie dessen Befestigungssegmente können als ein einzelnes integrales Kunststoffbauteil gefertigt oder aus mehreren durch Schweiß- und / oder Klebeverbindungen zusammen gesetzten Teilen ausgebildet sein. Dabei können die Außenflächen der Befestigungssegmente spiel- und spaltfrei an der Innenfläche des Gehäuses anliegen. Die Zwischenräume zwischen den Befestigungssegmenten können dabei ausgefüllt sein von zwei Befestigungshülsen, die die Befestigungssegmente fest zusammen und in das Gehäuse pressen. Dabei können das Gehäuse und die Befestigungshülsen insbesondere aus nicht magnetischem Edelstahl oder Titan gefertigt sein.

Die Lagereinrichtung der zum Gehäuse beweglichen Magnetanordnung kann zwei, jeweils endstämmig zur Magnetanordnung angeordnete Federelemente aufweisen, die zur Erhöhung der Quersteifigkeit als Doppelarm-Feder oder Labyrinth-Feder ausgebildet sein können. Dabei kann die Federstruktur einlagig oder doppellagig ausgebildet sein und darüber hinaus auch einen Anschlagpuffer integral umfassen. Um die Quersteifigkeit sowie die Materialbeständigkeit der Federelemente weiter erhöhen zu können, können insbesondere verschiedene Ausführungsformen der Doppelarm-Feder und der Labyrinth-Feder zur Lagerung der Magnetanordnung in einer erfindungsgemäßen elektrodynamischen Energiewandlers eingesetzt werden.

Der Begriff Doppelarm-Feder kann grundsätzlich einen flachen Körper aus einem Federwerkstoff bezeichnen mit einer axialen Erstreckungslänge in Ruhelage von mind. 0,5 mm und maximal 5,0 mm, umfassend einen inneren Befestigungsbereich und einen radial äußeren Befestigungsbereich, wobei einer der Befestigungsbereiche an dem Gehäuse und der andere Befestigungsbereich an der Magnetanordnung befestigt sein kann und die Befestigungsbereiche jeweils mindestens eine Ausnehmung des Federwerkstoffs zur Befestigung aufweisen können, und zwei Federarme, wobei diese Federarme jeweils durch vorbestimmte Freischneidebereiche aus dem Federwerkstoff freigeschnitten sein können, sodass der innere- und äußere Befestigungsbereich nur über die zwei vom Federwerkstoff freigeschnittenen Federarme miteinander verbunden sind und diese Federarme jeweils endstämmig in den inneren- und äußeren Befestigungsbereich münden. Einer der Freischneidebereiche kann von einem Punkt aus einen Mittelpunkt M, bei gleichbleibendem Radialabstand zum Mittelpunkt M, welcher im Zentrum des inneren Befestigungsbereichs liegt, um mindestens 180° und maximal 320° umlaufen und wird im Folgenden als äußerer Freischneidebereich bezeichnet. Der zweite Freischneidebereich kann entgegen der Richtung des Umlaufs des äußeren Freischneidebereichs den Mittelpunkt M ebenfalls um mindestens 180° und maximal um 320° umlaufen, wobei der Radius des Umlaufs geringer ist, als der des äußeren Freischneidebereichs und wird hier als innerer Freischneidebereich bezeichnet. Weitere Ausführungsformen der Doppelarm-Feder können mehr als einen äußeren und einen inneren Freischneidebereich aufweisen. In einer Ausführungsform einer erfindungsgemäßen Doppelarm-Feder weist diese zwei äußere, den Mittelpunkt M, bei einem vorbestimmten Radialabstand zu diesem Punkt M, umlaufenden Freischneidebereiche auf. Die weiter innen liegenden Freischneidebereiche weisen jeweils einen linearen Abschnitt auf, welcher den Mittelpunkt M nicht bei einem gleichbleibenden Radialabstand umläuft. Des Weiteren weisen die Freischneidebereiche dieser Ausführungsform kreis- und/oder halbkreis- förmige Materialausnehmungen auf.

Der Begriff Labyrinth-Feder kann einen flachen Körper aus einem Federwerkstoff mit einer axialen Erstreckungslänge in Ruhelage von mind. 0,5 mm und maximal 5,0 mm bezeichnen, umfassend einen inneren Befestigungsbereich und einen äußeren Befestigungsbereich, wobei einer der Befestigungsbereiche an dem Gehäuse und der andere Befestigungsbereich an der Magnetanordnung befestigt sein kann und die Befestigungsbereiche jeweils mindestens eine Ausnehmung des Federwerkstoffs zur Befestigung aufweisen, und der Federwerkstoff Freischneidebereiche aufweist, welche als Teile eines Kreisumfangs, mit einem gemeinsamen Mittelpunkt M, welcher im zentralen Befestigungsbereich liegt, aus dem Material des Federwerkstoffs ausgeschnitten sind. Die Freischneidebereiche können den Mittelpunkt mit unterschiedlichen Radien umlaufen, zwischen 90° und 170°, wobei sich jeweils zwei gleichartige Freischneidebereiche mit demselben Radius und spiegelsymmetrisch zu einer sich durch den Mittelpunkt verlaufenden Ebene gegenüber liegen. In einer Ausführungsform der Labyrinth-Feder können teilweise lineare Abschnitte in den Freischneidebereichen sowie halbkreisförmige und/oder kreisförmige und/oder längliche Materialausnehmungen in den Freischneidebereichen vorgesehen sein. Die linearen Abschnitte der Freischneidebereiche weisen entlang ihrer Längserstreckung nicht den gleichen radialen Abstand zum Punkt M auf. Diese Ausführungsformen der Labyrinth-Feder dienen dazu, die radiale Steifigkeit sowie die Materialbeständigkeit der Federelemente in Bezug auf die Verwendung in einem elektrodynamischen Energiewandler zu optimieren. In einer erfindungsgemäßen Ausführungsform können unterschiedliche Freischneidebereiche der Labyrinth-Feder mittels zusätzlichen, radial verlaufenden Freischneidebereichen verbunden sein.

Vorteilhaft können bei allen erfindungsgemäßen Federelementen jeweilige Freischneidebereiche keine kreisförmigen Öffnungen mit konstantem Radius aufweisen, sondern vielmehr kommen spiralförmige Öffnungen mit zunehmendem Öffnungsradius sowie Langlöcher ausgebildet sein, die exakt der Federarmbreite folgen, um auf möglichst großer Federarmlänge eine definierte, konstante Federarmbreite umsetzen zu können. Je nach Ausführungsform kann das jeweilige Federelement z.B. eine gewundene Federstruktur mit integralen Langlöchern oder z.B. Geometrie mit spiralförmigen Öffnungen aufweisen zur Umsetzung möglichst langer Federarme konstanter Breite bei gleichzeitig möglichst großen Windungs-Radien zur Minimierung der inneren Materialspannung, letzteres insbesondere im Bereich der Windungsumkehr.

Die genannten Federstrukturen können dazu einlagig oder doppellagig ausgeführt sein. Die doppellagige Ausführung erlaubt dabei größere Federarm-Längen, da die Federarme in dieser Ausführungsform nicht nur nebeneinander sondern auch übereinander liegend angeordnet werden können. Die größere Federarm-Länge wirkt sich dabei positiv auf das Schwingungsverhalten und die maximal erreichbare Schwingungsgüte aus. Daher sind die Federarme bei dieser Ausführungsform mit möglichst großen Radien und mit zwei Teil-Federarmen übereinander ausgeführt. Dadurch entsteht im Inneren dieser Radien ein ungenutzter Bereich, in dem ein zusätzlicher Anschlagpuffer als integraler Bestandteil dieser Federstruktur angeordnet werden kann. Die äußeren Federarme und die Federstruktur des Anschlagpuffers können dabei in Reihenschaltung angeordnet sein. Die Ausgestaltung ist derart, dass im Betrieb die Federstruktur des Anschlagpuffers erst dann aktiviert wird, wenn der Arbeitsbereich der äußeren Federn durch starke Stoßbelastung o.ä. überschritten wird.

Die elektronische Steuerung oder Regelung des elektrodynamischen Energiewandlers kann ausgebildet sein, den Momentanwert der Nutzlast-Impedanz durch Messung der Spannung und des Stroms zu bestimmen und den Betragswert dieser zu ermitteln. Die Gesamt-Lastimpedanz stellt die elektronisch regelbare Größe dar, welche die Schwingungsgüte beeinflusst, sodass die Kenntnis des Betragswerts der Nutzlast-Impedanz für die Regelung der Gesamt-Lastimpedanz notwendig ist.

Die elektronische Steuerung oder Regelung des elektrodynamische Energiewandlers kann ausgebildet und eingerichtet sein, zur Steuerung oder Regelung der Schwingungsamplitude der Magnetanordnung, indem auf Änderung von äußeren Umgebungs- und Betriebsbedingungen, insbesondere auf Änderungen der Umgebungstemperatur, der Anregungsamplitude und/oder der Anregungsfrequenz, die Gesamt-Lastimpedanz, vorzugsweise über einen stufig oder stetig einstellbaren Widerstand, anpassbar ist zur Beibehaltung einer vorgegebenen zulässigen Schwingungsgüte (Q0) und somit zur Bedämpfung der Magnetanordnung. Insbesondere kann die elektronische Steuerung oder Regelung über ein Steuerungsmodul verfügen, das dazu ausgebildet ist den Ausgang des elektrodynamischen Energiewandlers mit einem digitalen, beispielsweise Pulsweiten-modulierten Signal zu bedämpfen.

Bei der Bedämpfung des elektrodynamischen Energiewandlers mittels eines Pulsweiten-modulierten Signals kann ein zusätzlicher Belastungswiderstand mit einem Signal angesteuert werden, bei dem das zeitliche Verhältnis von Phasen hoher Ausgangsspannung zu Phasen niedriger Ausgangsspannung variabel einstellbar ist. Die Grenzen des Einstellbereichs sind dabei einerseits die zeitlich ununterbrochene Phase der hohen Ausgangsspannung und andererseits die zeitlich ununterbrochene Phase der niedrigen Ausgangsspannung. Auf diese Weise kann der zusätzliche Widerstand stetig und variabel mit Werten zwischen Massepotential und Höhe der Versorgungsspannung angesteuert werden, wodurch dann auch der Ausgangsstrom als die den elektrodynamischen Energiewandler bedämpfende Größe zwischen Null und Maximalwert stetig eingestellt werden kann.

Der erfindungsgemäße elektrodynamische Energiewandler kann so ausgebildet sein, dass die elektronische Steuerung oder Regelung zur Ausführung von zumindest zwei Betriebsarten mit unterschiedlichen Schwingungsgütebereichen (Q1) und (Q2) ausgebildet ist, wobei eine erste Betriebsart ein erster vorgegebenen Schwingungsgütebereich (Q1) vorsieht, welche die Schwingungsamplitude der Magnetanordnung auf einen konstruktiv dauerhaft zulässigen mittleren Wert beschränkt und eine zweite Betriebsart einen zweiten vorgegebenen Schwingungsgütebereich (Q2) vorsieht, welche eine höhere Schwingungsamplitude, als in der ersten Betriebsart, erlaubt. Diese Schwingungsgütebereiche (Q1, Q2) können dabei in entsprechender Weise wie vorstehend beschrieben durch eine jeweils zugeordnete Bedämpfung des Ausgangs des elektrodynamischen Energiewandlers eingestellt werden. Der erste Schwingungsgütebereich (Q1) kann dabei einen Zustand während eines Normalbetriebs darstellen und der zweite Schwingungsgütebereich (Q2) einen sogenannten Boost-Zustand, welcher während des Anschaltens eines Systems ausreichend Leistung liefert um z.B. einen vollständig entladenen Kondensator aufzuladen, indem die Schwingungsamplitude geringer begrenzt wird und somit größere Auslenkungen und damit eine größere resultierende Leistung möglich wird. Insbesondere kann die Steuerung oder Regelung für eine zeitlimitierte Dauer den gesamten Bereich der konstruktiv möglichen Federn-Auslenkung über die durch die vorbestimmte erste/zweite Schwingungsgüte begrenzte Federn-Auslenkung hinaus steuernd oder regelnd abdecken.

Die elektronische Steuerung oder Regelung des elektrodynamischen Energiewandlers kann zur Überwachung von mindestens einem Betriebsparameter wie z.B. der Amplitude der Schwingungsanregung ausgebildet sein und beim Überschreiten eines konstruktiv zulässigen Grenzwertes des zumindest einen Betriebsparameters eine dritte Betriebsart ausführen, in welcher einen dritten Schwingungsgütebereich (Q3) vorgegeben ist bzw. gesteuert oder geregelt wird, welcher um einen geringeren Schwingungsgütewert als der erste und der zweite Schwingungsgütebereich verteilt ist und einen Überlastbetrieb darstellt bei dem die Schwingungsamplitude der Magnetanordnung maximal bedämpft ist wenn die äußere Anregungsamplitude außerhalb der zulässigen Gerätespezifikation liegt und ferner ausgebildet sein zur Ansteuerung einer optischen und/oder akustischen Anzeige des zumindest einen Betriebsparameters einer Anzeigeeinrichtung und/oder zur Abspeicherung des zumindest einen Betriebsparameters. Die so gespeicherten Werte, welche über dem konstruktiv zulässigen Schwellen- oder Grenzwert liegen, können dazu dienen, eine Betriebshistorie zu erstellen aus welcher die Notwendigkeit einer Wartung ableitbar ist, welche umso früher statt zu finden hat je öfter und länger der Schwellenwert überschritten wurde. Ebenfalls kann mit abgespeicherten Werten erfasst werden, ob der elektrodynamische Energiewandler außerhalb der dafür ausgelegten Betriebsspezifikationen verwendet wurde.

Des Weiteren kann die Steuerung bzw. Regelung dafür ausgelegt sein, zu den Zeiten in denen keine elektrische Energie von dem elektrodynamischen Energiewandler entnommen wird, diesen über das normale Betriebs-Dämpfungsmaß hinaus noch stärker elektrisch zu bedämpfen um den Generator mechanisch zu entlasten und so die Anzahl der möglichen Betriebsstunden noch weiter zu erhöhen.

Die elektronische Steuerung oder Regelung zur Steuerung/ Regelung der Schwingungsgüte des elektrodynamischen Energiewandlers kann eine Schaltung zur Ausgabe einer Ausgangsspannung aufweisen, welche zur Absenkung der Ausgangsspannung dieser Schaltung in Abhängigkeit des ermittelten Momentanwerts der Lastimpedanz ausgebildet sein kann, zur Erzeugung einer zur Lastimpedanz proportionalen Ausgangsspannung, welche den Wert der Lastimpedanz abbildet und mit der elektronischen Steuerung oder Regelung ausgelesen werden kann. Ferner kann die elektronische Steuerung oder Regelung des elektrodynamischen Energiewandlers Schaltungselemente oder Schaltungsabschnitte aufweisen, die die elektronische Steuerung oder Regelung in die Lage versetzen, zum Ausgleich des Blindanteils des Spulenwicklungs-Widerstandes der Induktionsspule und zur Maximierung des Leistungsfaktors (cos(ϕ)) eine Kapazität z.B. in Form eines Kondensators in Serie zwischen die Spulenwicklung und die diese belastenden nachfolgenden Komponenten, beispielsweise einen Gleichrichter, zu schalten.

Die elektronische Steuerung oder Regelung des elektrodynamischen Energiewandlers kann Schaltungselemente oder Schaltungsabschnitte aufweisen, die die elektronische Steuerung oder Regelung in die Lage versetzen, zum Ausgleich des Blindanteils des Spulenwicklungs-Widerstandes und zur Maximierung des Leistungsfaktors (cos(ϕ)) eine Kapazität z.B. in Form eines Kondensators parallel zu der Spulenwicklung zu schalten.

Vorteilhafterweise kann der erfindungsgemäße elektrodynamische Energiewandler zur Erzeugung eines zur Geschwindigkeit der Magnetanordnung proportionalen Analogsignals einen Gebermagnet aufweisen, der an einem der Federelemente befestigt ist, sowie eine magnetische Loop-Antenne zur Erfassung des Magnetfeldes der Gebermagneten und zur Ausgabe des Analogsignals. Insbesondere kann die Loop-Antenne als SMD-Bauteil ausgebildet sein.

Zweckmäßigerweise kann die zumindest eine Induktionsspule des Energiewandlers eine zusätzliche Wicklungsanzapfung oder eine andersartige Spannungsteilereinrichtung aufweisen, die zur Ausgabe eines Analogsignals in Form einer induzierten Spannung ausgebildet ist, die ein Maß für die Geschwindigkeit der Magnetanordnung und/oder der daran befestigten Federelemente darstellt. Die zusätzliche Wicklungsanzapfung kann die Installation einer zusätzlichen Loop-Antenne ersetzen.

Die elektronische Steuerung oder Regelung kann eingerichtet und dazu ausgebildet sein das geschwindigkeitsproportionale Analogsignal elektronisch weiterzuverarbeiten, insbesondere zu integrieren zur Ermittlung eines analogen amplituden- bzw. wegproportionalen Spannungssignals, zur Bestimmung der Auslenkungshöhe der Magnetanordnung.

Der elektrodynamische Energiewandler kann eine elektronische Schaltung aufweisen, welche die Ausgangsspannung des Energiewandlers gleichrichtet und einen Energiespeicher lädt, beispielsweise einen Kondensator und/oder einen Akkumulator zur Speicherung der in elektrische Form umgewandelten Energie.

### Figurenbeschreibung

Im Folgenden wird die Erfindung durch Bezugnahme auf die beiliegenden Figuren erläutert und verschiedene Ausführungsformen aufgezeigt, wobei
- Figur 1: eine Schnittdarstellung einer ersten Art eines erfindungsgemäßen elektrodynamischen Energiewandlers,
- Figur 2: eine Explosionszeichnung einer Magnetanordnung und Poleinrichtung für den erfindungsgemäßen elektrodynamischen Energiewandler der Fig. 1,
- Figur 3: eine Darstellung des Feldlinienverlaufs zwischen zwei Magneten, einem Polschuh und einer Induktionsspule, des erfindungsgemäßen Energiewandlers der Fig. 1,
- Figur 4: eine Darstellung des Feldlinienverlaufs zwischen zwei Magneten, einem Polschuh, einer Induktionsspule und einem Topf aus einem ferroelektrischen Material, welches als magnetischer Rückschluss dient, des erfindungsgemäßen Energiewandlers der Fig. 1,
- Figur 5: eine erste Ausführungsform einer Lagereinrichtung der Magnetanordnung in Form einer Labyrinth-Feder für den erfindungsgemäßen elektrodynamischen Energiewandler der Fig. 1,
- Figur 6: eine zweite Ausführung einer Lagereinrichtung der Magnetanordnung in Form einer Doppelarm-Feder für den erfindungsgemäßen elektrodynamischen Energiewandler der Fig. 1,
- Figur 7: eine dritte Ausführungsform einer Lagereinrichtung der Magnetanordnung in Form einer weiteren Labyrinth-Feder für den erfindungsgemäßen elektrodynamischen Energiewandler der Fig. 1,
- Figur 8a: eine vierte Ausführungsform einer Lagereinrichtung der Magnetanordnung in Form einer weiteren Labyrinth-Feder für den erfindungsgemäßen elektrodynamischen Energiewandler der Fig. 1,
- Figur 8b: eine Variante der vierten Ausführungsform einer Lagereinrichtung der Magnetanordnung in Form einer weiteren Labyrinth-Feder für den erfindungsgemäßen elektrodynamischen Energiewandler der Fig. 1,
- Figur 9: die Halteeinrichtung für den erfindungsgemäßen elektrodynamischen Energiewandler der Fig. 1 in einer perspektivischen Ansicht, und
- Figur 10: eine Draufsicht des Topfes und der radial über die Außenseite des Topfes abstehende Halteeinrichtung der Spulenanordnung des elektrodynamischen Energiewandlers der Fig. 1,
- Figur 11: eine Schnittdarstellung des Topfes, entlang der in Figur 10 gezeichneten Achse A, mit in Einbaulage befindlicher Halteeinrichtung der Spulenanordnung des elektrodynamischen Energiewandlers der Fig. 1,
- Figur 12: eine perspektivische Schnittdarstellung des Topfes und der sich durch diesen abschnittsweise erstreckende und am Gehäuse fixierte Halteeinrichtung der Spulenanordnung des elektrodynamischen Energiewandlers der Fig. 1,
- Figur 13: eine Messwertdarstellung zur Verdeutlichung der Funktion der Poleinrichtung in Form eines Polschuhs des erfindungsgemäßen Energiewandlers der Fig. 1, und
- Figur 14: ein Blockschaltbild zur automatischen Regelung der Schwingungsgüte des erfindungsgemäßen Energiewandlers der Fig. 1 in Abhängigkeit der Umgebungs- und Betriebsbedingungen,
- Figur 15: ein Blockschaltbild zur elektronischen Einstellung der Schwingungsgüte des erfindungsgemäßen Energiewandlers der Fig. 1 in Abhängigkeit der Umgebungsund Betriebsbedingungen,
- Figur 16: eine Schnittdarstellung einer Magnetanordnung für eine zweite Art eines erfindungsgemäßen elektrodynamischen Energiewandlers, und
- Figur 17: eine Explosionsdarstellung einer Magnetanordnung für eine weitere Ausführungsform einer zweiten Art eines erfindungsgemäßen elektrodynamischen Energiewandlers zeigt.

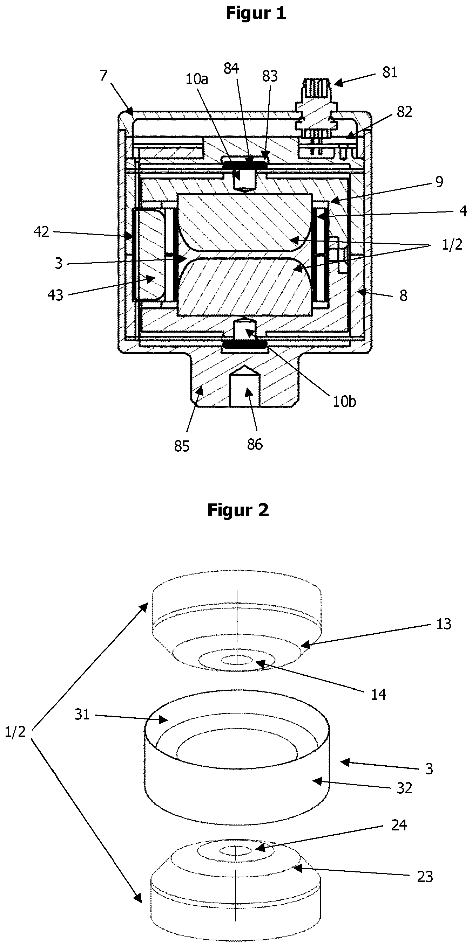

Die Gestaltung des erfindungsgemäßen elektrodynamischen Energiewandlers ist in einer Vielzahl von Ausführungsformen umsetzbar. Figur 1 zeigt einen möglichen Aufbau des erfindungsgemäßen elektrodynamischen Energiewandlers erster Art in einer Schnittdarstellung.

Der elektrodynamische Energiewandler umfasst hier ein Gehäuse 7, eine zum Gehäuse 7 beweglich gelagerte Magnetanordnung 100 mit zumindest zwei koaxial und beabstandet zueinander ausgerichteten Magneten 1,2 und einer zwischen diesen Magneten 1,2 angeordneten magnetische Poleinrichtung in Form eines Polschuhs 3. Die beweglich zum Gehäuse gelagerte Magnetanordnung 100 umfasst in der Ausführungsform der Fig.1 ferner einen Topf 8 aus einem ferromagnetischen Material, der die zumindest zwei koaxial und beabstandet zueinander ausgerichteten Magneten 1,2 und den zwischen den Magneten 1,2 angeordneten Polschuh 3 sowie die relativ zum beweglich gelagerten Topf ortsfest zum Gehäuse gelagerte Spulenanordnung, insbesondere in der Form einer Induktionsspule, umgibt zum Schließen der Magnetfeldlinien.

Demnach umfasst der elektrodynamische Energiewandler in der beschriebenen Ausführungsform eine zum Gehäuse 7 mittels einer Halteeinrichtung 9 zur Magnetanordnung 100 ortsfest angeordnete und von dem Magnetfeld der Magnetanordnung 100 durchdrungene Spulenanordnung, die selbst zumindest eine zylinderförmige und langgestreckte Induktionsspule 4 aufweist. Zur Lagerung und mechanischen Kopplung der zum Gehäuse 7 beweglichen Magnetanordnung 100 am Gehäuse 7 weist der elektrodynamische Energiewandler eine Lagereinrichtung auf, welche zwei einlagige oder doppellagige planare Federelemente 10a, b umfasst und welche jeweils an einem stirnseitigen Endabschnitt der Magnetanordnung, insbesondere am Topf 8 und am Gehäuse 7 befestigt sind. An zumindest einem der Federelemente 10a, b ist in der beschriebenen Ausführungsform ein Gebermagnet 84 angeordnet, welcher der Bewegung der Federelementen 10a, b folgt. Zur Erzeugung eines zu den Federelementen 10a, b geschwindigkeitsproportionalen Signals ist am Gehäuse 7 zumindest eine Loop-Antenne oder eine weitere Induktionsspule 83 angebracht, welche das sich in ihrem Ort ändernde Magnetfeld des Gebermagneten erfasst.

Der Bodenabschnitt des Gehäuses 93 kann eine Aussparung zur Befestigung an einem dem elektrodynamischen Energiewandler zugeordneten Bauteil aufweisen. Das Gehäuse des elektrodynamischen Energiewandlers 7 wird in der beschriebenen Ausführungsform nur durch eine elektrische Anschlussvorrichtung in Form einer Steckervorrichtung 81 durchbrochen, welcher dazu dient die elektrische Energie und weitere mögliche Steuer- und/oder Informationssignale von der Steuerung oder Regelung 82 aus dem Inneren des Gehäuses 7 abzuführen. Diese Steuer- oder Datenleitungen können auch zur bidirektionalen Steuer- und Datenkommunikation ausgebildet sein.

Eine mögliche erfindungsgemäße Magnetanordnung 100 des elektrodynamischen Energiewandlers umfassend zwei Magnete 1,2 sowie einen Polschuh 3 ist in Figur 2 in einer Explosionszeichnung angegeben, wobei der auch umfasste Topf aus ferromagnetischem Material nicht dargestellt ist. Die koaxial angeordneten, rotationssymmetrischen Magnete 1,2, mit einer zylindrischen Querschnittsfläche senkrecht zur Rotationsachse, sind in Richtung zum Polschuh 3 konisch geformt 13,23 und weisen eine flache, senkrecht zur Rotationsachse verlaufende Stirnseite 14,24 auf.

Der Polschuh 3 ist an seiner Polschuhinnenseite 31 komplementär zu der Oberfläche der Magnete 1,2 geformt, sodass diese Magnete 1,2, nach Einsetzen in den Polschuh 3 zumindest teilweise von dem Polschuh umschlossen bzw. aufgenommen sind und die Magnete 1,2 spielfrei an dem Polschuh 3 anliegen, sodass ein größtmöglicher magnetischer Fluss gewährleistet ist. Die Polschuhaußenseite bzw. -mantelfläche 32 ist als Zylinderoberfläche ausgebildet, um eine große Oberfläche zur magnetischen Ankopplung an die Induktionsspule 4 bereitzustellen.

Die Magnete 1,2 können in der beschriebenen Ausführungsform eines erfindungsgemäßen Energiewandlers entlang der Rotationsachse keine über deren gesamte Erstreckungslänge verlaufende Bohrung aufweisen, sondern nur eine Vertiefung auf den flachen, sich gegenüberliegenden Stirnseiten (14,24) der Magnete zur Zentrierung der Magnete und der zwischen ihnen befindlichen Poleinrichtung innerhalb des magnetischen Topfkreises. Dadurch, dass die Magnete keine durchgängige Bohrung aufweisen wird der andernfalls im Inneren der Bohrung verlaufende magnetische Streufluss vermieden und steht somit stattdessen als äußerer magnetischer Nutzfluss im Bereich der Induktionsspule zur Verfügung.

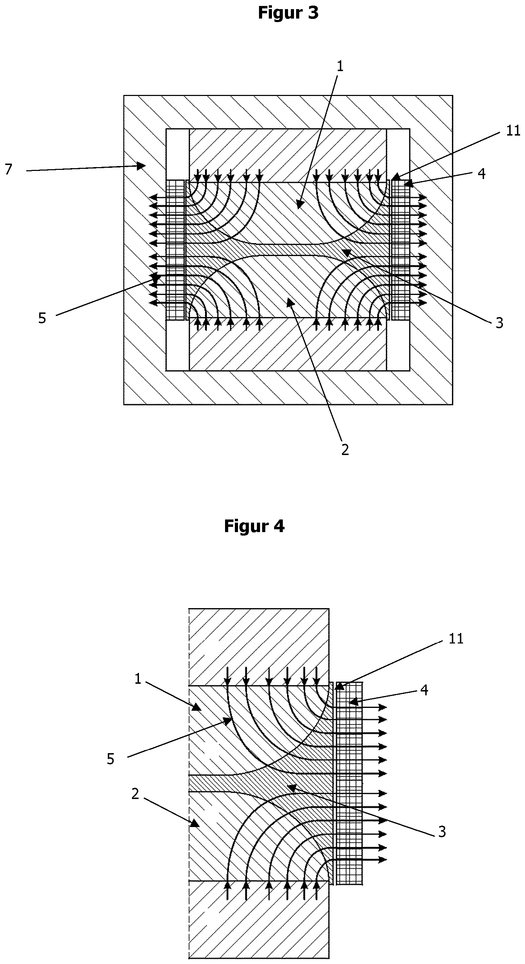

Der Verlauf der Magnetfeldlinien 5 der in Figur 2 gezeigten Magnetanordnung 100 des elektrodynamischen Energiewandlers ohne Darstellung des die Magnetanordnung abschließenden Topfes aus ferromagnetischem Material ist in den Figuren 3 und 4 skizziert. Das durch die zwei mit gleichen Polen sich gegenüberliegenden Magnete 1,2 entstehende Magnetfeld 5 wird über den Polschuh 3 senkrecht durch die Induktionsspule 4 gelenkt, wodurch eine gute magnetische Kopplung bei einem minimalen Luftspalt zwischen Polschuh 3 und Induktionsspule 4 bereitgestellt ist. Dieser Luftspalt ist derart ausgebildet, dass die Magnetanordnung 100, bestehend aus Polschuh 3, Magneten 1,2 sowie den nur in Figur 4a skizzierten Topf 8 relativ zur vom Topf eingeschlossenen Induktionsspule und zu deren Halteeinrichtung reibungsfrei in axialer Richtung bewegbar ist. Aus Figur 4 geht darüber hinaus der durch den durch den Topf 8 gebildete magnetische Rückschluss der Magnetfeldlinien 5 hervor, der im wesentlichen spaltfrei an die Induktionsspule angrenzt und aus einem magnetisch leitfähigen Material gebildet ist.

Zur Lagerung der Magnetanordnung 100 des erfindungsgemäßen elektrodynamischen Energiewandlers werden im Folgenden vier unterschiedliche Ausführungsformen von planaren Federelementen (10a,b) beschrieben, welche wahlweise in dem erfindungsgemäßen Energiewandler einsetzbar sind und welche eine hohe Quersteifigkeit bei guten Schwingungseigenschaften in axialer Richtung aufweisen, um sicherzustellen das der erfindungsgemäße elektrodynamische Energiewandler mit einem minimalen Luftspalt zwischen Magnetanordnung und Induktionsspule betrieben werden kann und somit ein möglichst optimaler Wirkungsgrad vorliegt.

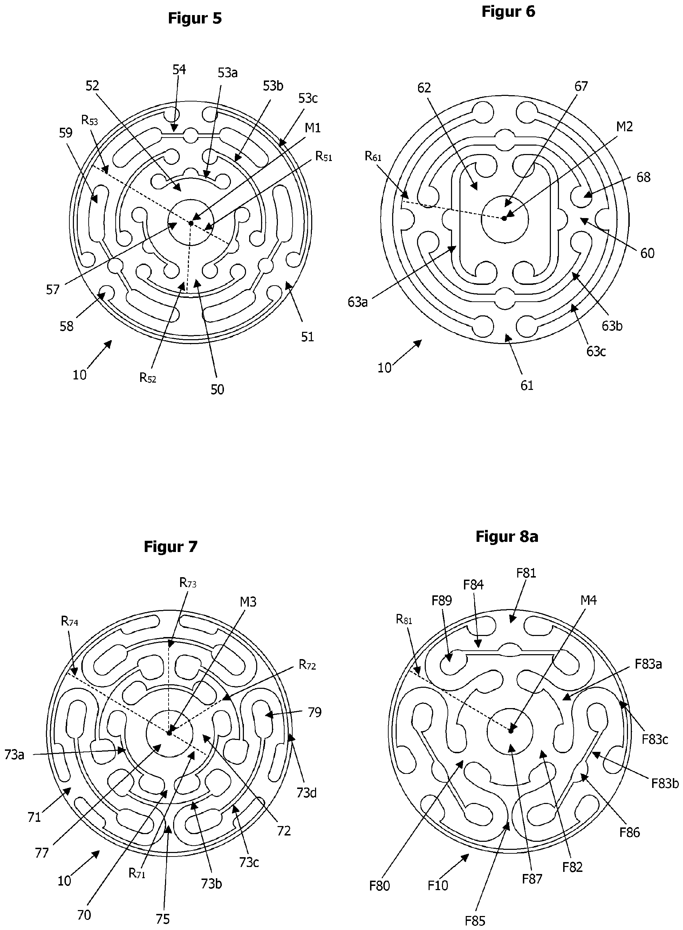

Die Figur 5 zeigt eine besonders vorteilhafte Ausführungsform eines planaren Federelements zur Verwendung in dem erfindungsgemäßen, elektrodynamischen Energieumwandler in der Art einer Labyrinth-Feder. Das gezeigte planare Federelement 10 hat eine zylindrische Grundform mit einer geringen Höhe (Dicke), insbesondere kleiner als 1 cm. Zentral weist das Federelement 10 eine kreisförmige Befestigungsausnehmung 57 auf, welche vom inneren Befestigungsbereich 52 umgeben ist. Dieser innere Befestigungsbereich 52 dient zur Anlage des Federelements 10 an eines von zwei zu befestigenden Bauteilen. Ausgehend vom Mittelpunkt M1 des Federelements 10 befinden sich jeweils im radialen Abstand R51, R52 und R53 drei den Mittelpunkt M1, bei gleichbleibendem Radialabstand R5x, umlaufende Freischneidebereiche 53a, b, c, wobei diese Materialausnehmungen einen maximalen Umlauf von weniger als 120° aufweisen und endstämmig kreisförmige Materialausnehmungen 58 aufweisen. Radial zwischen den Freischneidebereichen 53b und 53c und umfänglich zu diesen versetzt weist das Federelement 10 drei lineare Freischneidebereiche 54 auf, welche entlang ihrer Längserstreckung einen variablen Radialabstand zum Punkt M1 aufweisen, und welche in den Mittelpunkt, bei gleichbleibendem Radialabstand zu diesem, umlaufende Langlöcher 59 enden. Die Freischneidebereiche 53a, b, c und 54 dienen dazu, drei Federarme 50 vom Federmaterial freizuschneiden, sodass diese drei Federarme 50 den inneren Befestigungsbereich 52 mit dem äußeren Befestigungsbereich 51 in axialer Richtung federnd verbinden. Des Weiteren weisen die im Radialabstand R51 verlaufenden Freischneidebereiche 53a mittig je eine halbkreisförmige Materialausnehmung 56 auf. Die linearen Freischneidebereiche 54 weisen zusätzlich zu den Langlöchern 59 mittig je eine kreisförmige Materialausnehmung 58 auf.

Die Figur 6 zeigt eine weitere vorteilhafte Ausführungsform eines planaren Federelements 10 zur Lagerung einer Magnetanordnung 1, 2 eines erfindungsgemäßen elektrodynamischen Energiewandlers in der Art einer Doppelarm-Feder. Das in Figur 6 gezeigte planare Federelement 10 weist ebenfalls zentral eine Befestigungsausnehmung 67, welche vom inneren Befestigungsbereich 62 umgeben ist, auf. Im Radialabstand R61 vom Mittelpunkt M2 des Federelements 10 umlaufen zwei umfänglich beabstandete Freischneidebereiche 63c den Mittelpunkt M2, wobei diese Freischneidebereiche 63c mittig und endstämmig je eine kreisförmige Materialausnehmung 68 aufweisen. Diese Freischneidebereiche 63c umlaufen den Mittelpunkt M2 zu weniger als 180°. In einem geringeren gleichbleibenden radialen Abstand zum Mittelpunkt M2 verlaufen ferner zwei umfänglich beabstandete Freischneidebereiche 63b, welche einen kreisförmigen Abschnitt sowie einen linearen Abschnitt 64 (Anmerkung: in der Figur nicht gekennzeichnet) aufweisen. Diese Freischneidebereiche 63b weisen ebenfalls je mittig und endstämmig eine kreisförmige Materialausnehmung 68 auf. Die Freischneidebereiche 63a, b, c dienen dazu, die zwei Federarme 60 von Federmaterial freizuschneiden, sodass der innere Befestigungsbereich 62 in axialer Richtung federnd mit dem äußeren Befestigungsbereich 61 über die zwei Federarme 60 verbunden ist.

Figur 7 zeigt eine besonders vorteilhafte Ausführungsform eines planaren Federelements 10, welche als Abwandlung des in Figur 5 gezeigten planaren Federelements 10 angesehen werden kann. Das in Figur 7 dargestellte Federelement 10 unterscheidet sich von dem der Figur 5 insbesondere dadurch, dass die Freischneidebereiche 73a, b, c, d keine Linearanteil aufweisen und jeweils einer der Freischneidebereiche 73b mit einem der Freischneidebereiche 73d über zusätzliche, radial verlaufende Freischneidungen 75 verbunden sind. Des Weiteren entfallen in dieser Ausführungsform die in der Mitte der Freischneidebereiche angeordneten kreisförmigen und halbkreisförmigen Materialausnehmungen 58, 53, ferner liegen die endstämmigen Materialausnehmungen als Langlöcher 79 und deformierte Rundlöcher vor.

Figur 8a zeigt eine weitere besonders vorteilhafte Ausführungsform eines planaren Federelements 10, welche als Abwandlung der in Figur 5 und Figur 7 gezeigten planaren Federelementen 10 angesehen werden kann. Die in Figur 8a dargestellte Ausführungsform weist lediglich drei unterschiedliche Freischneidebereiche F83a, b, c auf, wovon die Freischneidebereiche F83a und F83c miteinander über zusätzliche relativ zum Mittelpunkt M4 radial verlaufende Freischneidungen F85 verbunden sind und wobei die Freischneidebereiche F83b linear ausgebildet sind.

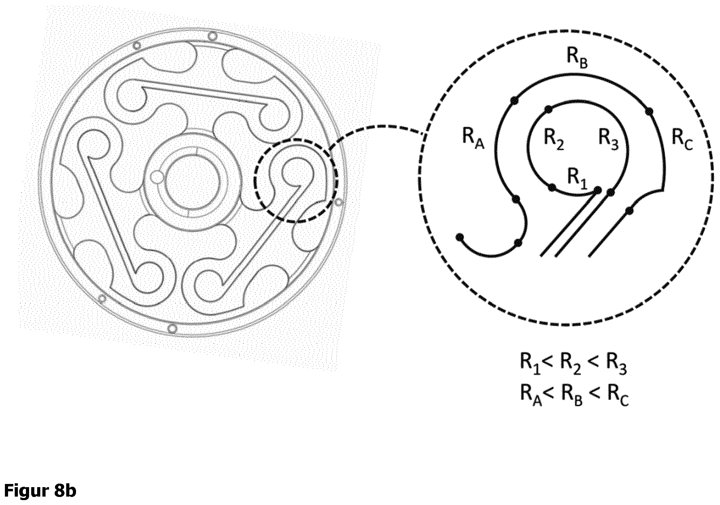

Eine Variante der vierten Ausführungsform einer Lagereinrichtung der Magnetanordnung in Form einer weiteren Labyrinth-Feder zeigt Figur 8b. Das in Figur 8a und Figur 8b dargestellte Federelement mit Linearführungs-Eigenschaften stellt eine um 120° versetzt angeordnete, gewundene Federgeometrie dar. Grundsätzlich sind solche gewundenen Federstrukturen bekannt, insbesondere aus dem Einsatz bei Kältemaschinen und Magnetventilen. In EP 3 030 803 B1 wird ebenfalls eine "s"-förmig gewundene Federstruktur vorgestellt, bei der jeder Biegearm eine oder mehrere kreisförmige Öffnungen umfasst. Diese kreisförmigen Öffnungen führen dazu, dass der Kraftfluss in den Biegearmen nach außen wandert, sich auf diese Weise besser verteilt und der Materialstress insgesamt sinkt. Dies ist wichtig für eine möglichst lange zerstörungsfreie Betriebsdauer. Das beschriebene flexible Linearlager ist hauptsächlich für den Einsatz in Kältemaschinen vorgesehen, bei denen es darauf ankommt, dass das Linearlager keine parasitäre Rotation zulässt, wie das beispielsweise bei spiralförmig gewundenen Blattfedern der Fall ist. Die Dimensionierung der sich aus der Federrate des flexiblen Linearlagers und der beweglichen Masse ergebende Resonanzfrequenz ist dabei eher unkritisch und darf nur kritische Bereiche anderer Maschinenresonanzen nicht ungewollt verstärken.

In der Anwendung der vorliegenden Erfindung handelt es sich aber um einen resonant schwingenden Lineargenerator. Dessen Anforderungen wie gute Längsbewegungs- und Querstabilitäts-Eigenschaften sowie eine möglichst hohe Anzahl zulässiger Längsbewegungs-Profile, sind zwar teilweise ähnlich zu den Kältemaschinen- und Magnetventil-Applikationen aber darüber hinaus ist bei resonant schwingenden Lineargenerator die exakte Federrate und die sich daraus ergebende Generator-Resonanzfrequenz von existenzieller Bedeutung. Um alle diese technischen Anforderungen zu erfüllen, können erfindungsgemäß diese Federelemente mit Linearführungs-Eigenschaften bei fremderregt schwingenden Lineargeneratoren aus besonderen, sehr langzeitstabilen Material-Legierungen gefertigt werden.

Die Dimensionierung der Federelemente für den erfindungsgemäßen Energiewandler ist umso einfacher, umso größer die freie Federarmlänge mit konstanter Breite ausgeführt werden kann. Um dies zu erreichen, sind bei der in Figur 8a und Figur 8b dargestellten Federgeometrie keine kreisförmigen Öffnungen mit konstantem Radius vorgeschlagen, sondern vielmehr kommen spiralförmige Öffnungen mit zunehmendem Öffnungsradius sowie Langlöcher, die exakt der Federarmbreite folgen, zum Einsatz, um auf möglichst großer Federarmlänge eine definierte, konstante Federarmbreite umsetzen zu können. Figur 8a zeigt dazu die Konstruktion einer gewundenen Federstruktur mit integralen Langlöchern und Figur 8b stellt eine Konstruktion der Federgeometrie dar mit spiralförmigen Öffnungen zur Umsetzung möglichst langer Federarme konstanter Breite bei gleichzeitig möglichst großen Windungs-Radien zur Minimierung der inneren Materialspannung, dies insbesondere im Bereich der Windungsumkehr.

Um bei den beschriebenen Ausführungsformen die Federelemente gegen Verdrehung an der Befestigung des zentralen Befestigungsbereichs 61 zu sichern, kann die zentrale Befestigungsausnehmung 66 gezahnt vorliegen, sodass eine komplementär ausgebildete, der Befestigungsausnehmung 66 zugeordneten Befestigungsnase in die Zähne eingreift. Darüber hinaus sind weitere Ausführungen zur Verdrehsicherung des magnetischen Topfkreises gegenüber dem Gehäuse, insbesondere beispielsweise durch Passstifte oder auch andere konstruktive Ausführungen möglich.

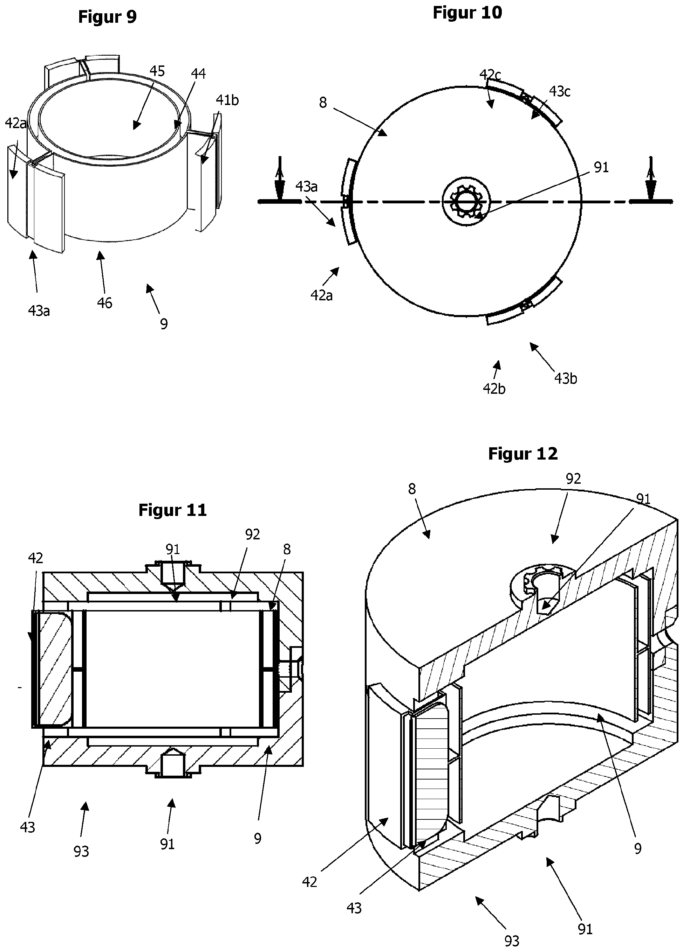

Die von dem erfindungsgemäßen Energiewandler der Figur 1 umfasste Halteeinrichtung 9 zur Befestigung der Induktionsspule 4 des erfindungsgemäßen elektrodynamischen Energiewandlers am Gehäuse 7 ist in Figur 9 dargestellt. Die Halteeinrichtung 9 umfasst einen zylinderförmigen Hohlkörper mit einem Innenzylinder 45 und einem Außenzylinder 46, wobei zwischen Innen- und Außenzylinder 45,46 ein Zwischenbereich 44 ausgebildet ist, in welchem die zumindest eine Induktionsspule 4 aufnehmbar ist. Der sich axial erstreckende Außenzylinder 46 weist drei über radial verlaufende Verbindungsstege 41a, b, c verbundene Befestigungsstege 42a, b, c auf zur Befestigung, insbesondere mittels einer Formschluss-, Reibschluss- oder Klebeverbindung, der Halteeinrichtung am Gehäuse. Die Befestigungsstege 42a, b, c weisen jeweils eine außenliegende Nut 43a, b, c auf zur Durchführung von elektrischen Anschlüssen aus dem Inneren der Halteeinrichtung 9 zwecks Kontaktierung der Induktionsspule.

Die Figuren 10, 11 und 12 zeigen eine vorteilhafte Ausführungsform des Topfes 8 des erfindungsgemäßen Energiewandlers zur Bereitstellung eines magnetischen Rückschlusses. Die Figur 10 zeigt den magnetischen Rückschluss in einer Draufsicht und Figuren 11 sowie 12 je in einer Schnittdarstellung, wobei der Schnitt in Figur 11 entlang der in Figur 10 dargestellten Achse A verläuft und der Schnitt in Figur 12 parallel zur Längsachse des Topfes 8 bzw. der Spule orientiert ist. Die Befestigungsstege 42 der Halteeinrichtung 9 durchbrechen den, die Halteeinrichtung 9 ansonsten vollständig umschließenden Topf 8.

An dem Deckelabschnitt 92 und dem Bodenabschnitt 93 weist der Topf 8 Befestigungselemente 91 auf, welche eine Befestigung des Topfes 8 an dem Mittelpunkt der oberen und unteren Federn 78 ermöglichen.

Die Funktionsweise des erfindungsgemäßen elektrodynamischen Energiewandlers nach Figur 1 wird im Folgenden erläutert. Der erfindungsgemäße elektrodynamische Energiewandler ist dazu ausgebildet unter äußerer Zufuhr von Vibrationsenergie diese in elektrische Energie umzuwandeln und einem Verbraucher oder Speicher zur Verfügung zu stellen.

Hierzu wird die mittels der Federelemente 10a, b gelagerte Magnetanordnung 100 durch die äußere Anregung in eine Schwingung versetzt. Durch die räumliche Relativbewegung des zeitlich konstanten Magnetfeldes des magnetischen Kreises gegenüber der ortsfest am Gehäuse 7 gelagerten Induktionsspule 4 wird in dieser eine elektrische Wechselspannung mit der Frequenz der mechanischen Magnetkreis-Schwingung erzeugt. Dabei ist die Auslenkungsamplitude der Magnetanordnung umso größer, je höher die von außen wirkende Anregungskraft ist und je näher die Anregungsfrequenz zu der Eigenfrequenz des erfindungsgemäßen Energiewandlers liegt. Durch die erfindungsgemäßen Doppelarm- / Labyrinth- Federelementen 10a, b, welche eine jeweilige hohe Quersteifigkeit aufweisen, wird jeweils ein nahezu reibungsfreies Schwingen der Magnetanordnung 100 ermöglicht. Um auf Änderungen der anregenden Kraft reagieren zu können, insbesondere um zu vermeiden, dass die Schwingungsamplitude des Systems Werte annimmt, bei welchen vorgegebene Belastungsgrenzen der Federelemente überschritten werden, ist die elektrische Schaltung oder Regelung 82 des erfindungsgemäßen Energiewandlers zur Anpassung der Lastimpedanz an die anregende Kraft und/oder die Anregungsfrequenz ausgebildet, zur Änderung der Schwingungsgüte des elektrodynamischen Energiewandlers. In der beschriebenen Ausführungsform ist der Energiewandler abhängig von den Anregungsbedingungen und/oder einer jeweiligen Betriebssituation in der Lage unterschiedliche Betriebsarten mit verschiedenen Schwingungsgütebereichen wie beispielsweise Q1, Q2 und Q3 auszuführen.

Die erste Betriebsart sieht einen Schwingungsgütebereich ≤ Q1 vor, welcher die Schwingungsamplituden der Magnetanordnung 100 auf konstruktiv permanent zulässige Werte beschränkt und stellt dabei einen Zustand während eines Normalbetriebs dar. Die zweite Betriebsart sieht einen Schwingungsgütebereich > Q1 und ≤ Q2 vor, welcher höhere Schwingungsamplituden der Magnetanordnung 100 als der erste Bereich erlaubt. Die zweite Betriebsart stellt somit einen sogenannten Boost-Zustand dar, welcher über einen kurzen Zeitraum nach dem Anschalten eines Systems ausreichend Leistung liefert um z.B. einen vollständig entladenen Kondensator aufzuladen. Über eine beschränkte Zeitdauer wird dabei eine erhöhte mechanische Belastung (Schwingungsamplituden) der Federelemente erlaubt, die einerseits unter der konstruktiv zulässigen mechanischen Maximalspannung und andererseits über der dauerhaft zulässigen mechanischen Materialspannung liegt.

Die dritte Betriebsart der beschriebenen Ausführungsform sieht einen vorbestimmten Schwingungsgütebereich Q3 < Q1 vor, welcher um einen niedrigeren Schwingungsgütewert als die Schwingungsgütebereiche Q1 und Q2 verteilt ist, wodurch die Schwingungsamplituden der Magnetanordnung 100 bei einer die konstruktiv maximal zulässige Anregungsbeschleunigung übersteigenden äußeren Schwingungsanregung maximal bedämpft sind und die insofern einen Notfallbetrieb darstellt. Die elektronische Schaltung oder Regelung 82 ist in der beschriebenen Ausführungsform insofern eingerichtet, auf die Änderungen der äußeren Anregung und/oder eines jeweiligen Betriebszustandes des Energiewandlers zu reagieren, indem eine der unterschiedlichen Betriebsarten ausgeführt wird.

Die genannten Schwingungsgütebereiche Q1, Q2 und Q3 legen somit fest, wie die elektronische Steuerung oder Regelung adaptiv auf äußere Umgebungs- und Anregungsbedingungen sowie auf innere Lastimpedanz- und Ladungszustände reagiert. Dabei ist die Einteilung in unterschiedliche Schwingungsgütebereiche nicht diskret aufgetrennt, sondern vielmehr können durch eine linear variable, von dem Mikrocontroller vorgegebene Führungsgröße die einzelnen Schwingungsgütebereiche durchlaufen und durchgängig jede mögliche Schwingungsamplitude eingeregelt bzw. eingestellt werden. Dabei stellt im Wesentlichen eine mittlere Schwingungsamplitude einen Normalbetrieb dar, die maximal mögliche Bedämpfung stellt unter Aufrechterhaltung der nötigen Betriebsspannung einen teilweisen Kurzschluss und somit einen Notbetrieb zur möglichst weiten Limitierung der Schwingungsamplitude bei eingangsseitiger Anregungsüberlastung dar und eine hohe Schwingungsamplitude nahe an den konstruktiv kurzzeitig zulässigen Materialspannungswerten stellt mit erhöhten Werten der elektrischen Ausgangsleistung einen temporären Boost-Betrieb mit Leistungsreserve dar.

Es kann vorgesehen sein, eine Speicherung der Information über Betriebsparameter, wie z.B. maximale Schwingungsamplitude der Magnetanordnung und/oder die Umgebungstemperatur vorzunehmen. Zu diesem Zweck kann der erfindungsgemäße Energiewandler eine zugeordnete Informations-Speichereinrichtung aufweisen.

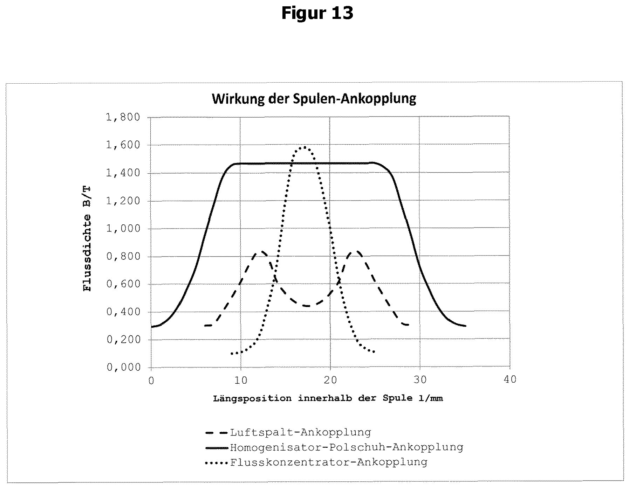

Die Auswirkung der Spulen-Ankopplungsart auf die Magnet-Flussdichte B in Tesla in Abhängigkeit der Längsposition innerhalb der Spule l in mm ist in Figur 13 dargestellt. Der durchgängige Graph der Fig. 13 stellt die Ankopplung an die Induktionsspule bei einem erfindungsgemäßen Energiewandler dar, bei welchen eine wie obenstehend beschriebene, speziell geometrisch gestaltete Poleinrichtung zwischen den beiden Magneten angeordnet ist. Die Ankopplung der Magnete an die Induktionsspule mittels einer solchen, als Homogenisator-Polschuh ausgebildeten Poleinrichtung bewirkt eine konstante Flussdichte über einen breiten Bereich der in der Mitte der Spule und fällt erst zu den Rändern der Induktionsspule hin ab. Zum Vergleich mit dem Stand der Technik sind zudem noch zwei weitere Spulen-Ankopplungsarten in Figur 13 dargestellt. Der dünn gestrichelte Graph stellt die magnetische Ankopplung an die Induktionsspule bei Vorliegen eines Luftspaltes zwischen den Magneten ohne Vorsehen eines Polschuhs dar. Erkennbar verläuft die Verteilung der Flussdichte über die Längsposition innerhalb der Spule inhomogen. Dabei weist die Flussdichte im Bereich von ca. ¼ und ¾ der Spulenlänge l zwei lokale Maxima auf und ein breites Minimum im mittleren Bereich der Spulenlänge. Erkennbar ist die Flussdichte in dieser Ausführungsform eines Energiewandlers vergleichsweise gering, gleichbedeutend mit einem geringen Wirkungsgrad. Der gepunktete Graph in Fig. 13 stellt demgegenüber die magnetische Ankopplung an die Induktionsspule mittels eines herkömmlichen Flusskonzentrators, d.h. eines herkömmlichen Polschuhs zwischen den Magneten dar. Danach hat die Flussdichte einen gaußförmigen Verlauf über die dargestellte Spulenlänge, sodass im Bereich mittlerer Spulenlänge ein Maximum erreicht wird und die Flussdichte zu den Rändern der Induktionsspule hin abnimmt. Der Wirkbereich der Induktionsspule unter Verwendung des erfindungsgemäßen Homogenisator-Polschuhs deckt einen wesentlich größeren Bereich der Spulenlänge ab, als der Wirkbereich der beiden zuvor beschriebenen Ankopplungsformen und stellt darüber hinaus in diesem Bereich eine etwa konstante Flussdichte bereit. Der Homogenisator-Polschuh bewirkt also sowohl eine Verstärkung als auch eine Homogenisierung des magnetischen Flussdichte-Verlaufes im Bereich der Induktionsspule. Darüber hinaus bewirkt der Homogenisator-Polschuh eine fast vollständig rechtwinklige Ankopplung des magnetischen Vektorfeldes an den Bereich der Induktionsspule. Dies ist insofern wichtig, als nur die rechtwinklig zu der Bewegung des magnetischen Kreises und zum Verlauf der Leiterschleifen der Induktionsspule verlaufenden Komponenten der magnetischen Flussdichte-Vektoren überhaupt eine Spannungsinduktion und auf diese Weise auch eine Energieumwandlung bewirken können. Demgegenüber stehen parallel zur vertikalen Spulenausdehnung und zur Bewegungsrichtung des magnetischen Kreises verlaufende Vektorkomponenten der magnetischen Flussdichte nicht für die Energiekonvertierung zur Verfügung. Auf diese ergibt sich aus der Funktionalität des Homogenisator-Polschuhs eine effektive Erhöhung des Generator-Wirkungsgrades betreffend die Energieumwandlung.

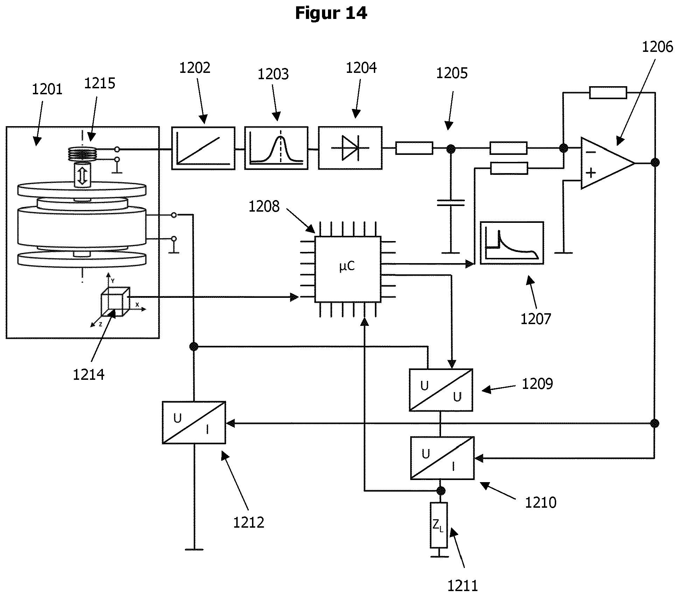

Zur erfindungsgemäßen Regelung der Schwingungsgüte Q des erfindungsgemäßen elektrodynamischen Energiewandlers kann eine elektrische Regelung vorgesehen sein, welche zumindest einen Integrator 1202, einen Bandpassfilter 1203, einen Gleichrichter 1204, einen Tiefpassfilter 1205, einen Linearregler 1206, einen Mikroprozessor 1208, einen 3D-Beschleunigungssensor 1214, einen Schaltregler 1209, eine Lastimpedanz 1211, eine zusätzliche Spule 1215 und zumindest zwei Spannungs-/Strom-Konverter 1210, 1212 umfasst. Ein Blockschaltbild einer derartigen elektrischen Regelung ist in Figur 14 dargestellt.

Die in Figur 14 gezeigte Regelung reagiert auf Änderungen der äußeren Anregungsamplitude, sowie auf zusätzliche Umgebungsparameter wie z.B. die Umgebungstemperatur oder die Luftfeuchtigkeit. Um dieses Regelverhalten zu erreichen, liefert die zusätzliche Spule 1215 ein zur Geschwindigkeit der Spulenanordnung proportionales lineares Spannungssignal, welches dem Integrator 1202 zugeführt wird, zur Berechnung eines wegproportionalen Spannungssignals. Das wegproportionale Spannungssignal wird durch den Bandpassfilter 1203 gefiltert, den Gleichrichter 1204 gleichgerichtet und anschließend in dem Tiefpassfilter 1205 erneut gefiltert. Dieses bearbeitete, wegproportionale Spannungssignal steht nun dem Linear-Regler 1206 zur Verfügung. Der Linear-Regler 1206 wird zudem mit einer vom Mikroprozessor 1208 bereitgestellten linearen Führungsgröße in Form einer Spannung gespeist und gibt ein Differenz-Spannungssignal in Höhe der Differenz des wegproportionalen Spannungssignals zur Führungsgröße aus. Dieses Differenz-Spannungssignal steuert den ersten Spannungs-/Strom-Konverter 1210 und den zweiten Spannungs- /Strom-Konverter 1212 an, welche durch Einstellen der Stromstärke in Reihe zur Lastimpedanz ZL und parallel zur Lastimpedanz den resultierenden Gesamtwiderstand ändern können und somit die resultierende Schwingungsgüte Q festlegen. Dabei sind die beiden Spannung-/Strom-Konverter 1210 und 1212 so aufeinander abgestimmt, dass zunächst der Strom durch den Spannung-/Strom-Konverter 1210 in Reihe zur Lastimpedanz ZL steigt. Wenn die Lastimpedanz selbst zu hochohmig ist, dass der zur notwendigen Bedämpfung erforderliche Strom nicht fließen kann, übernimmt der Spannung-/Strom-Konverter 1212 und stellt den notwendigen Bedämpfungsstrom bereit. Hierzu ist der Spannung-/Strom-Konverter 1212 nicht durch eine Lastimpedanz in Reihe limitiert und kann demzufolge einen zusätzlichen und höheren Strom bereitstellen als der Spannung-/Strom-Konverter 1210. Insofern schließt sich die Kennlinie des Spannung-/Strom-Konverter 1212 an die Kennlinie des Spannung-/Strom-Konverter 1210 an und reagiert später als der Spannung-/Strom-Konverter 1210. Um auf äußere Einflüsse reagieren zu können und die Schwingungsgüte optimal einzustellen, liefert der 3D-Beschleunigungs-Sensor 1214, zusätzlich zu den die Schwingung anregenden Beschleunigungswerten, verschiedene Umgebungsparameter wie z.B. die aktuelle Temperatur und/oder die aktuelle Luftfeuchtigkeit an den Mikroprozessor 1208. Diese Messwerte werden zur Berechnung der linearen Führungsgröße anhand der Kennlinie des eingesetzten planaren Federelements verwendet. Demnach ist die Führungsgröße der Regelung in dieser Ausführungsform weder konstant, noch vorab definiert oder festgelegt, sondern eine dynamische Führungsgröße, die adaptiv auf aktuelle äußere Umgebungsparameter und/oder an aktuelle Betriebs- und Anregungsbedingungen des Energiewandlers angepasst wird. Diese Führungsgröße der Regelung ist dabei variabel und stetig und führt dazu, dass die Regelung den gesamten technisch möglichen Schwingungsgütebereich ebenfalls linear und stetig abbilden bzw. einregeln kann.

Der Schaltregler 1209 wird mit der in der Induktionsspule induzierten Spannung sowie einem Steuersignal des Mikroprozessors 1208 gespeist. Der Schaltregler 1209 senkt insofern seine Ausgangsspannung quasi verlustfrei ab, um die Differenz zwischen seiner Ausgangsspannung und der Lastspannung zu minimieren, wobei die Steuerung über das Steuersignal des Mikroprozessors 1208 erfolgt, der die an der Lastimpedanz abfallende Spannung abgetastet, siehe Figur 14. Die induzierte Spannung wird mittels des Schaltreglers 1209 und des Mikroprozessors 1208 derart modifiziert, dass die Differenz zwischen der Ausgangsspannung des Schaltreglers 1209 und der an der Lastimpedanz anfallenden Lastspannung minimiert ist um einerseits die Induktionsspule nicht zu stark zu belasten und um andererseits unerwünschte Energieumwandlung in dem Längswiderstand des Spannungs-Strom-Konverters 1210 zu vermeiden.

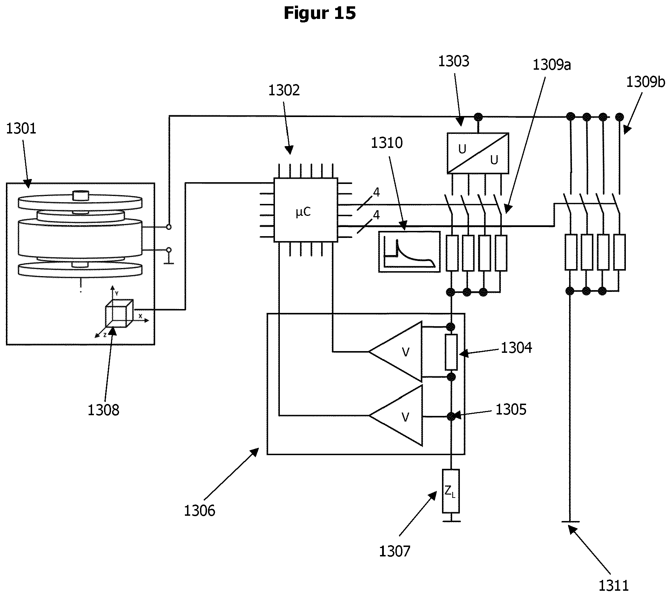

Im Gegensatz zur obenstehend beschriebenen erfindungsgemäßen Regelung der Schwingungsgüte Q des erfindungsgemäßen elektrodynamischen Energiewandlers kann im Rahmen der Erfindung auch eine Einstellung bzw. Steuerung der Schwingungsgüte Q in Abhängigkeit der vom 3D-Beschleunigungs-Sensor gemessenen Beschleunigungswerte und/oder weiterer Umgebungsparameter mit einem Teilregelkreis vorgesehen sein, wobei die Steuerungsschaltung zumindest einen Mikroprozessor 1302, einen Schaltregler 1303, eine Einheit zur Lastimpedanz-Bestimmung 1306, welche eine Schaltung zur Strom-Messung 1304 und eine Schaltung zur Spannungs-Messung 1305 umfasst, eine Lastimpedanz 1307, einen 3D-Beschleunigungs-Sensor 1308 und zwei schaltbare Widerstände 1309a,b umfasst, wobei 1309a in Reihe und 1309b parallel zur Lastimpedanz 1307 geschaltet ist. Ein Blockschaltbild einer entsprechenden Steuerung mit einem Teilregelkreis ist in Figur 15 dargestellt. Die Funktionalität des schaltbaren Widerstandes 1309a kann dabei als eine Pulsweiten-modulierte Ausgangsstufe in Reihe zur Lastimpedanz und der schaltbare Widerstand 1309b kann als eine Pulsweiten-modulierte Ausgangsstufe parallel zu der in Reihe zur Lastimpedanz geschalteten Pulsweiten-modulierten Ausgangsstufe ausgebildet sein, wobei die beiden Pulsweiten-modulierten Ausgangsstufen jeweils einen oder mehrere Belastungs-Festwiderstände aufweisen können.

Zur Einstellung bzw. Steuerung der Schwingungsgüte Q und somit zur Einstellung bzw. Steuerung der unter den vorliegende Umgebungs- und Anregungsbedingungen konstruktiv zulässigen Schwingungsamplituden wird das gleichgerichtete und geglättete Spannungssignal der Induktionsspule des erfindungsgemäßen elektrodynamischen Energiewandlers 1301 an den Schaltregler 1303 mit dem nachgeschalteten ersten schaltbaren Widerstand 1309a und parallel zum Schaltregler 1303 und zum ersten schaltbaren Widerstand 1309a an den weiteren zweiten schaltbaren Widerstand 1309b angelegt, wobei der erste schaltbare Widerstand 1309a über den Schaltregler 1303 in Reihe und der zweite schaltbare Widerstand 1309b parallel zur Lastimpedanz 1307 geschaltet ist. Der Mikroprozessor 1302 steuert diese schaltbaren Widerstände 1309a, b in Abhängigkeit einer Tabelle, welche den an dem 3D-Beschleunigungs-Sensor 1308 gemessenen äußeren Anregungsamplituden einen eindeutig zugeordneten Bedämpfungswiderstand bzw. Widerstandswert zuweist, der über die nachstehend beschriebene Einstellung zu der gewünschten Federauslenkungen führt. Diese Tabelle kann Korrekturwerte umfassen, z.B. zur Berücksichtigung einer Temperaturabhängigkeit eines Betriebsparameters des Energiewandlers. Ist der so vom Mikroprozessor ermittelte Widerstandswert größer als der durch die Lastimpedanz bereitgestellte Lastwiderstand, so muss ein Widerstand in Reihe 1309a hinzugefügt werden. Ist der erfasste Widerstand jedoch kleiner als der Lastwiderstand, so muss ein Widerstand parallel 1309b zum Lastwiderstand hinzugeschaltet werden. Der durch den eingestellten Widerstand 1309a geführte Strom wird über eine Schaltung 1306 zur Lastimpedanz-Bestimmung zur Lastimpedanz 1307 geleitet. Die Schaltung 1306 zur Lastimpedanz-Bestimmung, umfassend eine Schaltung 1304 zur Strom-Messung und eine Schaltung zur Spannungs-Messung 1305, gibt die Messsignale an den Mikroprozessor 1302. Der Schaltregler 1303 bildet mit dem Mikroprozessor 1302 und der Schaltung 1306 zur Lastimpedanz Bestimmung einen Teil-Regelkreis innerhalb der Steuerungsschaltung und dient dazu, die an der Spule induzierte Spannung um einen, mittels eines Informationssignals des Mikroprozessors 1302 definierten, Faktors abzusenken, sodass die Differenz zwischen Ausgangsspannung und Spannung an der Lastimpedanz minimiert wird. Die Angleichung der Spannungen findet kontinuierlich statt und ist notwendig um einerseits einen Kurzschluss der Induktionsspulenwicklung zu verhindern und um andererseits den zuzuschaltenden Widerstand möglichst gering zu halten, sodass möglichst wenig Energie in Wärme umgesetzt wird.

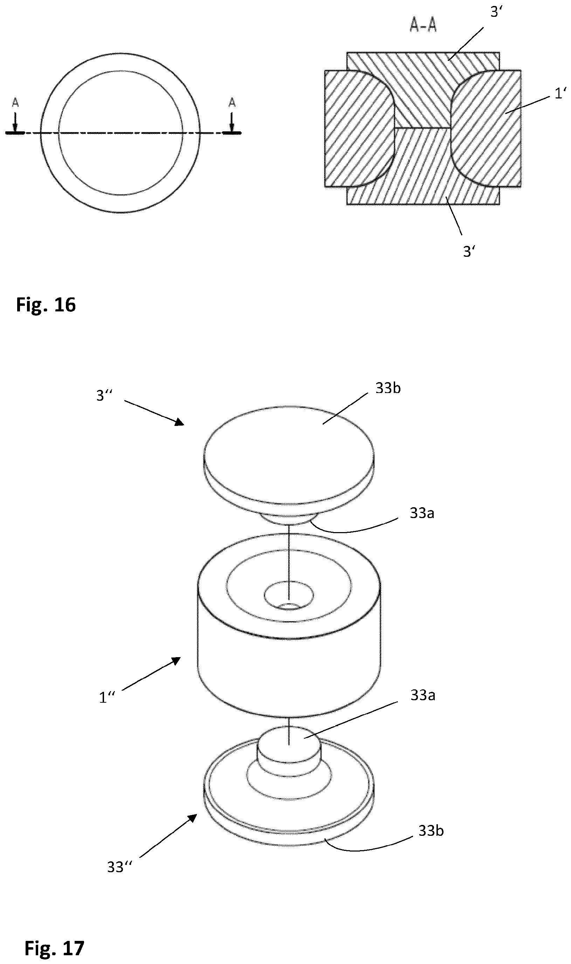

Eine alternative Ausführungsform zu dem insbesondere in den Figuren 1 und 2 angegebenen erfindungsgemäßen elektrodynamischen Energiewandler erster Art ist in den Figuren 16 und 17 dargestellt. Figur 16 zeigt eine erste Ausführungsform eines erfindungsgemäßen elektrodynamischen Energiewandlers zweiter Art bezüglich der Gestaltung der Magnetanordnung. Während die linke Darstellung der Figur 16 eine Aufsicht auf die Magnetanordnung darstellt, zeigt die rechte Darstellung einen Längsschnitt in der Ebene A-A. Die Magnetanordnung umfasst in der beschriebenen Ausführungsform eines erfindungsgemäßen elektrodynamischen Energiewandlers zweiter Art einen einzelnen, radial magnetisierten Magneten 1' sowie zwei identisch aufgebaute Polteile 3', welche zusammen die Poleinrichtung bilden. Die zweiteilige Poleinrichtung ist rotationssymmetrisch aufgebaut, wobei beide Polteile 3' symmetrisch um eine Rotationsachse und identisch aufgebaut sind mit jeweiligen kreisförmigen axialen Stirnflächen, die unterschiedliche Radien aufweisen. In Einbaulage sind beide Polteile 3` koaxial zueinander ausgerichtet und in Kontakt ihrer beiden axialen Stirnflächen mit geringerem Radius spaltfrei axial mittig aneinanderliegend angeordnet. Erkennbar weist der Magnet 1` ein Mittenloch oder Durchführung auf, deren Begrenzungsfläche komplementär an die Mantelfläche der Polteile 3' angepasst ist, derartig, dass die Polteile bzw. die Polanordnung spaltfrei am Magnet 1' anliegen. Die axial rotationsymmetrischen Polteile 3` verjüngen sich ausgehend von ihrer Stirnfläche mit größerem Durchmesser in axialer Richtung hin zur Stirnfläche mit geringerem Durchmesser, wobei die jeweilige Schnittfläche kreisförmig ist.

Figur 17 zeigt eine weitere Ausführungsform eines erfindungsgemäßen elektrodynamischen Energiewandlers zweiter Art bezüglich der Gestaltung der Magnetanordnung in einer Explosionsdarstellung. Der radial magnetisierten Magnet 1" weist auch in dieser Ausführungsform eine mittige Durchführung auf, durch welche sich die zum Magneten koaxial ausgerichteten Polteile 3" abschnittsweise erstrecken, derart, dass der Magnet 1" axial durch die beiden Polteile 33" umfasst ist und die Stirnflächen 33a der beiden Polteile in Einbaulage spaltfrei aneinanderliegen. Gleichzeitig liegen die Polteile 3" mit ihrer jeweiligen Stirnseite mit größerem Durchmesser an einer zugeordneten Stirnseite des Magneten 1" spaltfrei an. Wegen der Ausführungsform der Figur 16 ist die Begrenzungsfläche der Durchführung des Magneten 1" in der Ausführungsform der Figur 17 an die zugeordnete Mantelfläche der Polteile 3" angepasst, derart dass Polanordnung und Magnet spaltfrei zueinander angeordnet sind. Die beiden Ausführungsformen der Fig. 16 und 17 unterscheiden sich in Bezug auf den Verlauf der Mantelflächen der Polteile 3' und 3" in axialer Richtung sowie der daran angepassten komplementären Begrenzungsflächen der Durchführung der Magnete 1' bzw. 1".

Wie der Fachmann erkennt, zeichnet sich der erfindungsgemäße elektrodynamische Energiewandler zweiter Art dadurch aus, dass bezüglich der Gestaltung der Magnetanordnung ein einzelner, radial magnetisierter Magnet magnetisch rechtwinklig an die Induktionsspule angekoppelt sein kann, wobei dann eine zweigeteilte magnetische Poleinrichtung von oben und unten, d. h. axial beidseitig, in den Ringmagnet eingreift und so den magnetischen Fluss nach oben und unten umlenkt und zu dem aus dem Deckel und dem Boden des ferromagnetischen Topfes gebildeten magnetischen Rückschluss ableitet.

### Elektrodynamischer Energiewandler

**Bezugszeichenliste**

| | | | |
|---|---|---|---|
| 1,2 | Magnet | 14/24 | flache Stirnseite |
| 1', 1" | Magnet | | |
| 3 | Polschuh | 31 | Polschuhinnenseite |
| 3', 3'' | Polteil | 32 | Polschuhaußenseite |
| 4 | Induktionsspule | 33a, b | Stirnfläche |
| 5 | Magnetfeldlinien | 41a,b,c | Verbindungsstege |
| 7 | Gehäuse | 42a,b,c | Befestigungsstege |
| 8 | Topf | 43a,b,c | außenliegende Nut |
| 9 | Halteeinrichtung | 44 | Zwischenbereich |
| 10a,b | planare Federelemente | 45 | Innenzylinder |
| | | 46 | Außenzylinder |
| 13/23 | konisch geformte Magnetflächen | 50 | Federarme |
| | | | |
| 51 | äußerer Befestigungsbereich | 67 | zentrale Befestigungsausnehmung |
| 52 | innerer Befestigungsbe- reich | 68 | kreisförmige Materialausnehmung |
| 53a,b,c,d | Freischneidebereiche | M2 | Mittelpunkt |
| | | R61 | radialer Abstand |
| 54 | lineare Freischneidebereiche | | |
| 56 | halbkreisförmige Materialausnehmung | 70 | Federarme |
| | | 71 | äußerer Befestigungsbereich |
| 57 | zentrale Befestigungsausnehmung | 72 | innerer Befestigungsbereich |
| 58 | kreisförmige Materialausnehmung | 73a,b,c,d | Freischneidebereiche |
| 59 | längliche Materialausnehmung | | |
| R51, R52, R53 | radialer Abstand | 77 | zentrale Befestigungsausnehmung |
| M1 | Mittelpunkt | 79 | längliche Materialausnehmung |
| 60 | Federarme | M3 | Mittelpunkt |
| 61 | äußerer Befestigungsbe-reich | R71, R72, R73, R74 | radialer Abstand |
| 62 | innerer Befestigungsbereich | F80 | Federarme |
| 63a,b,c | Freischneidebereich | F81 | äußerer Befestigungsbereich |
| 64 | linearer Abschnitt | | |
| F82 | innerer Befestigungsbereich | 1201 | Magnet- und Spulenanordnung |
| F84 | linearer Abschnitt | | |
| F86 | halbkreisförmige Materialausnehmung | 1202 | Integrator |
| | | 1203 | Bandpassfilter |
| F87 | zentrale Befestigungs-ausnehmung | 1204 | Gleichrichter |
| | | 1205 | Tiefpassfilter |
| F89 | längliche Materialausnehmung | | |
| | | 1206 | Linearregler |
| M4 | Mittelpunkt | 1207 | Führungsgröße |
| R81 | radialer Abstand | 1208 | Mikroprozessor |
| | | 1209 | Schaltregler |
| 81 | Steckervorrichtung | 1210 | Erster Spannungs/Strom Konverter |
| 82 | Steuerung/Regelung | 1211 | Lastimpedanz |
| 83 | weitere Induktionsspule | 1212 | Zweiter Spannungs-/Strom Konverter |
| 84 | Gebermagnet | 1214 | 3D-Beschleunigungssensor |
| 85 | Unterseite des Gehäuses | | |
| 91 | Befestigungselemente | 1301 | Magnet- und Spulenanordnung |
| 92 | Deckelabschnitt | | |
| 93 | Bodenabschnitt | 1302 | Mikroprozessor |
| 94 | Mantelabschnitt | 1303 | Schaltregler |
| | | 1304 | Schaltung zur Strom-messung |
| 100 | Magnetanordnung | | |
| 1305 | Schaltung zur Spannungsmessung | 1309a,b | ständeSchaltbare Widerstände |
| 1306 | Schaltung zur Lastimpedanz-Bestimmung | 1310 | adaptive Stellgröße |
| | | 1311 | Verbrau-cher/Energiespeicher |
| 1307 | Lastimpedanz | | |
| 1308 | 3D-Beschleunigungs-Sensor | | |
| | | | |

## Patentansprüche

1. Elektrodynamischer Energiewandler zum Umwandeln von mechanischer Bewegungsenergie in elektrische Energie, umfassend
- ein Gehäuse (7),
- eine zum Gehäuse (7) beweglich gelagerte Magnetanordnung (100) zur Bereitstellung eines Magnetfeldes mit zumindest zwei koaxial und beabstandet zueinander ausgerichteten und axial magnetisiserten Magneten (1,2), wobei die beiden Magnete (1,2) stirnseitig gleichpolig zueinander angeordnet sind und zwischen den beabstandeten Magneten eine magnetische Poleinrichtung umfassend ein magnetisch leitfähiges Material angeordnet ist,
- eine zum Gehäuse (7) mittels einer Halteeinrichtung (9) ortsfest angeordnete und von dem Magnetfeld der Magnetanordnung (100) durchdrungene Spulenanordnung umfassend zumindest eine zylinderförmige und langgestreckte Induktionsspule (4), welche die Magnetanordnung (100) zumindest abschnittsweise umgibt,
- eine Lagereinrichtung zur Lagerung der zum Gehäuse (7) beweglichen Magnetanordnung (100), die sowohl Federungs- und Dämpfungs- als auch Linearführungs-Funktionalität umfasst, wobei,
eine jeweilige Stirnfläche der beiden axial magnetisierten Magneten (1,2) komplementär zu einer jeweils zugeordneten Stirnfläche der Poleinrichtung ausgebildet ist, derart, dass zwischen der Poleinrichtung und den Magneten (1,2) kein Luftspalt besteht und die Poleinrichtung und die Magnete (1,2) auf Kontakt aneinander anliegen, wobei die Poleinrichtung in einer Richtung parallel zu der Spulenachse die beiden axial magnetisierten Magnete (1,2) umgreift zur Ankopplung der beiden axial magnetisierten Magneten (1,2) an die Induktionsspule (4) und zur Homogenisierung der magnetischen Flussdichte in der Induktionsspule (4), und wobei die Halteeinrichtung (9) zumindest drei Befestigungsabschnitte zu deren Befestigung an das Gehäuse (7) aufweist, die radial verlaufend außen zur Induktionsspule (4) angeordnete und jeweils um 120° versetzte Befestigungsstege (42a, b, c) umfassen, und die Lagereinrichtung zur Lagerung der zum Gehäuse (7) beweglichen Magnetanordnung (100) mindestens zwei einlagige oder doppellagige planare Federelemente (10a, b) umfasst, welche jeweils zumindest zwei radial oder axial verlaufende Federarme und/oder durch Stege verbundene Teil-Federarme aufweist zur Bereitstellung einer hohen Quersteifigkeit der Lagerung und eine elektronische Steuerung oder Regelung (82), welche ausgebildet ist zur Einstellung oder Regelung der Längssteifigkeit in der Auslenkung des schwingungsfähigen Systems bestehend aus Magnetanordnung (100), Federelementen (10a, b) und Gehäuse (7).

2. Elektrodynamischer Energiewandler zum Umwandeln von mechanischer Bewegungsenergie in elektrische Energie, umfassend
- ein Gehäuse (7),
- eine zum Gehäuse (7) beweglich gelagerte Magnetanordnung (100) zur Bereitstellung eines Magnetfeldes mit einem radial magnetisierten Magneten mit axialen Stirnflächen, wobei der Magnet von einer mehrteiligen, koaxial zum zumindest einen Magneten ausgerichteten magnetischen Poleinrichtung aus magnetisch leitfähigem Material räumlich umfasst ist,
- eine zum Gehäuse (7) mittels einer Halteeinrichtung (9) ortsfest angeordnete und von dem Magnetfeld der Magnetanordnung (100) durchdrungene Spulenanordnung umfassend zumindest eine zylinderförmige und langgestreckte Induktionsspule (4), welche die Magnetanordnung (100) zumindest abschnittsweise umgibt,
- eine Lagereinrichtung zur Lagerung der zum Gehäuse (7) beweglichen Magnetanordnung (100), die sowohl Federungs- und Dämpfungs- als auch Linearführungs-Funktionalität umfasst, **dadurch gekennzeichnet, dass** eine jeweilige axiale Stirnfläche des radial magnetisierten Magneten komplementär zu einer jeweils zugeordneten axialen Stirnfläche der Poleinrichtung ausgebildet ist, derart, dass zwischen der Poleinrichtung und dem Magneten kein Luftspalt besteht und die Poleinrichtung und der Magnet auf Kontakt aneinander anliegen, wobei die zweigeteilte Poleinrichtung den radial magnetisierten Magneten senkrecht zu der Spulenachse umgreift zur Ankopplung des radial magnetisierten Magneten an die Induktionsspule (4) und zur Homogenisierung der magnetischen Flussdichte in der Induktionsspule (4), und wobei die Halteeinrichtung (9) zumindest drei Befestigungsabschnitte zu deren Befestigung an das Gehäuse (7) aufweist, die radial verlaufend außen zur Induktionsspule (4) angeordnete und jeweils um 120° versetzte Befestigungsstege (42a, b, c) umfassen, und die Lagereinrichtung zur Lagerung der zum Gehäuse (7) beweglichen Magnetanordnung (100) mindestens zwei einlagige oder doppellagige planare Federelemente (10a, b) umfasst, welche jeweils zumindest zwei radial oder axial verlaufende Federarme und/oder durch Stege verbundene Teil-Federarme aufweist zur Bereitstellung einer hohen Quersteifigkeit der Lagerung und eine elektronische Steuerung oder Regelung (82), welche ausgebildet ist zur Einstellung oder Regelung der Längssteifigkeit in der Auslenkung des schwingungsfähigen Systems bestehend aus Magnetanordnung (100), Federelementen (10a, b) und Gehäuse (7).

3. Elektrodynamischer Energiewandler nach Anspruch 1 oder 2, **dadurch gekennzeichnet, dass** die Poleinrichtung in der Art eines Polschuhs (3) als magnetische Linse ausgebildet ist, die eingerichtet ist zur Aufnahme von Magnetflüssen der beiden gegenpolig wirkenden und stirnseitig gleichpolig angeordneten axial magnetisierten Magneten (1,2) bzw. zur Aufnahme von Magnetflüssen des einen radial magnetisierten Magneten, zur Verstärkung, Homogenisierung und Umlenkung des Magnetflusses in eine Richtung senkrecht zur Achse der Induktionsspule (4) und zur Einkopplung in die Induktionsspule (4).

4. Elektrodynamischer Energiewandler nach Anspruch 1 oder 3, **dadurch gekennzeichnet, dass** die Poleinrichtung rotationssymmetrisch aufgebaut ist mit einer Mantelfläche und zwei, jeweils einem der beiden axial magnetisierten Magneten (1,2) zugewandten, axial beabstandeten Stirnseitenflächen, wobei senkrecht zur Rotationsachse die jeweilige Stirnseitenhöhe der Poleinrichtung mit radialem Abstand zur Achse ausgehend von Rotationsachse kontinuierlich zunimmt)

5. Elektrodynamischer Energiewandler nach Anspruch 2 oder 3, **dadurch gekennzeichnet, dass** die Poleinrichtung axial zweiteilig ausgebildet ist, wobei beide Polteile symmetrisch um eine Rotationsachse (und identisch) aufgebaut sind mit kreisförmigen axialen Stirnflächen, die unterschiedliche Radien aufweisen, und beide Polteile koaxial zueinander ausgerichtet und in Kontakt ihrer beiden axialen Stirnflächen mit geringerem Radius aneinanderliegen, und der radial magnetisierte Magnet koaxial zu den Polteilen angeordnet ist und eine axiale Durchführung aufweist zur abschnittsweisen (und luftspaltfreien )Aufnahme der beiden Polteile.

6. Elektrodynamischer Energiewandler nach einem der Ansprüche 1 bis 4, **dadurch gekennzeichnet, dass** zur Bereitstellung eines magnetischen Rückschlusses die Magnetanordnung (100) einen geschlossenen Topf (8) aus ferromagnetischem Material umfassend einen Deckelabschnitt (92), einen Bodenabschnitt (93) und einen Mantelabschnitt (94) umfasst, wobei der Topf (7) die Magnete (1,2), die zumindest eine Induktionsspule (4), und die Poleinrichtung vollständig aufnimmt und allein durch die zumindest drei hochkant angeordneten Befestigungsstege (42a, b, c) der Induktionsspule (4) lokal durchbrochen ist.

7. Elektrodynamischer Energiewandler nach einem der vorbeschriebenen Ansprüche, **dadurch gekennzeichnet, dass** die Lagereinrichtung der zum Gehäuse (7) beweglichen Magnetanordnung (100) zwei, jeweils endstämmig zur Magnetanordnung (100) angeordnete Federelemente (10a, b) umfasst, die zur Erhöhung der Quersteifigkeit eine Doppelarm-Struktur, oder eine Labyrinth-Struktur aufweisen und die integral je eine zweite zur Abfederung starker Stöße geeignete Feder in Form eines Anschlagpuffers umfassen können.

8. Elektrodynamischer Energiewandler nach Anspruch 7, **dadurch gekennzeichnet, dass** die elektronische Steuerung oder Regelung (82) den Momentanwert der Nutzlast-Impedanz erfasst.

9. Elektrodynamischer Energiewandler nach einem der vorbeschriebenen Ansprüche, **dadurch gekennzeichnet, dass** die elektronische Steuerung oder Regelung (82) ausgebildet und eingerichtet ist, die Schwingungsamplitude der Magnetanordnung (100) dadurch zu steuern oder zu regeln, dass auf Änderung von äußeren Umgebungs- und Betriebsbedingungen, insbesondere auf Änderungen der Umgebungstemperatur, der Anregungsamplitude und der Anregungsfrequenz, die Belastungsimpedanz insgesamt anpassbar ist zur Beibehaltung einer unter diesen äußeren Umgebungs- und Betriebsbedingungen konstruktiv dauerhaft oder temporär zulässigen Schwingungsgüte Q, insbesondere indem die elektronische Regelung eine adäquate Führungsgröße oder indem die elektronische Steuerung eine eingestellte elektrische Belastung zur Adaptierung von Schwingungsamplituden an die Umgebungs- und Betriebsbedingungen ausgibt.

10. Elektrodynamischer Energiewandler nach einem der vorbeschriebenen Ansprüche, **dadurch gekennzeichnet, dass** die elektronische Steuerung oder Regelung (82) zumindest zwei Betriebsarten mit unterschiedlichen Schwingungsgütebereichen (Q1) und (Q2) aufweist, wobei eine erste Betriebsart einen ersten Schwingungsgütebereich (Q1) vorsieht, welcher die Schwingungsamplitude der Magnetanordnung (100) auf einen mittleren, konstruktiv dauerhaft zulässigen Wert beschränkt und eine zweite Betriebsart einen zweiten, demgegenüber höheren Schwingungsgütebereich (Q2) vorsieht, welcher eine höhere Schwingungsamplitude, als in der ersten Betriebsart, erlaubt, die über der dauerhaft zulässigen mittleren Schwingungsamplitude und unterhalb der konstruktiv zulässigen Augenblicks-Amplitude liegt.

11. Elektrodynamischer Energiewandler nach Anspruch 10, **dadurch gekennzeichnet, dass** die elektronische Steuerung oder Regelung (82) ausgebildet ist zur Überwachung von mindestens einem Betriebs- oder Umgebungsparameter wie z.B. der Anregungsamplitude des Energiewandlers und beim Überschreiten eines konstruktiv zulässigen Grenzwertes des zumindest einen Betriebs- oder Umgebungsparameters eine dritte Betriebsart ausführt in welcher ein dritter Schwingungsgütebereich (Q3) eingestellt oder geregelt wird , welche geringer als der erste und der zweite Schwingungsgütebereich ist, zur maximal möglichen Bedämpfung der Schwingungsamplitude der Magnetanordnung (100) zum Zwecke der Minimierung der Schwingungsamplitude der Magnetanordnung und zur optischen und/oder akustischen Anzeige der Überschreitung des als zulässig spezifizierten Wertes des zumindest einen Betriebs- oder Umgebungsparameters eine Anzeigeeinrichtung ansteuert und/oder anderweitig nach außen signalisiert und/oder die Information über die Überschreitung des zumindest einen Betriebs- oder Umgebungsparameters abspeichert.

12. Elektrodynamischer Energiewandler nach einem der vorbeschriebenen Ansprüche, **dadurch gekennzeichnet, dass** die elektronische Steuerung oder Regelung (82) zur Steuerung/Regelung der Schwingungsgüte eine Schaltung aufweist, welche zur verlustarmen Absenkung der Ausgangsspannung dieser Schaltung in Abhängigkeit des ermittelten Momentanwerts der Lastimpedanz (1211/1307) ausgebildet ist.

13. Elektrodynamischer Energiewandler nach einem der vorbeschriebenen Ansprüche, **dadurch gekennzeichnet, dass** der Energiewandler zur Erzeugung eines zur Geschwindigkeit der Magnetanordnung (100) proportionalen Analogsignals einen Gebermagnet (84), der an einem Federelemente (10a/10b) befestigt ist, aufweist sowie eine magnetische Loop-Antenne (83) zur Erfassung des Magnetfeldes der Gebermagneten (84) und zur Ausgabe des Analogsignals.

14. Elektrodynamischer Energiewandler nach einem der vorbeschriebenen Ansprüche, **dadurch gekennzeichnet, dass** die Induktionsspule (4) des Energiewandlers eine separate laststromlose zweite Wicklung, eine zusätzliche Wicklungsanzapfung oder eine zugeordnete Spannungsteilereinrichtung aufweist, die zur Ausgabe eines Signals in Form einer analogen Spannung ausgebildet ist, die ein Maß für die Geschwindigkeit der Magnetanordnung (100) und/oder der daran befestigten Federelemente (10a, b) darstellt.

15. Elektrodynamischer Energiewandler nach Anspruch 13 oder 14, **dadurch gekennzeichnet, dass** die elektronische Steuerung oder Regelung (82) dazu ausgebildet ist das geschwindigkeitsproportionale Analogsignal elektronisch weiterzuverarbeiten, insbesondere zu integrieren zur Bildung eines linearen, analogen amplituden- bzw. wegproportionalen Spannungssignals.

## Claims

1. Electrodynamic energy converter for converting mechanical kinetic energy into electrical energy, comprising:
- a housing (7),
- a magnet arrangement (100) mounted for movement relative to the housing (7) for providing a magnetic field with at least two coaxial and spaced magnets (1, 2) aligned relative to each other and axially magnetized, wherein the two magnets (1, 2) are arranged with the same polarity at their end faces and a magnetic pole device comprising a magnetically conductive material is arranged between the spaced magnets,
- a coil arrangement fixedly arranged relative to the housing (7) by means of a holding device (9) and penetrated by the magnetic field of the magnet arrangement (100), comprising at least one cylindrical and elongated induction coil (4) which surrounds the magnet arrangement (100) at least in sections,
- a bearing device for supporting the magnet arrangement (100) movable relative to the housing (7), comprising both spring and damping and linear guide functionality,
wherein a respective end face of said two axially magnetized magnets (1, 2) is formed complementary to a respectively assigned end face of the pole device in such a way that no air gap exists between the pole device and the magnets (1, 2) and the pole device and the magnets (1, 2) abut each other while contacting each other, wherein the pole device surrounds the two axially magnetized magnets (1, 2) in a direction parallel to the coil axis for coupling the two axially magnetized magnets (1, 2) with the induction coil (4) and for homogenization of the magnetic flux density in the induction coil (4), and wherein the holding device (9) has at least three fastening sections for its attachment to the housing (7), which fastening sections comprise fastening webs (42a, b, c) arranged radially on the outside of the induction coil (4) and offset by 120° in each case, and the bearing device for mounting the magnet arrangement (100) movable relative to the housing (7) comprises at least two single-layer or double-layer planar spring elements (10a, b), which each have at least two radially or axially extending spring arms and/or partial spring arms connected by webs for providing a high transverse rigidity of the mounting, and an electronic open loop or closed loop control (82), which is designed to set or control the longitudinal stiffness in the deflection of the vibration system consisting of magnet arrangement (100), spring elements (10a, b) and housing (7).

2. Electrodynamic energy converter for converting mechanical kinetic energy into electrical energy, comprising:
- a housing (7),
- a magnet arrangement (100) mounted for movement relative to the housing (7) for providing a magnetic field with a radially magnetized magnet with axial end faces, wherein the magnet is spatially surrounded by a multipart magnetic pole device from magnetically conductive material aligned coaxially with the at least one magnet,
- a coil arrangement fixedly arranged relative to the housing (7) by means of a holding device (9) and penetrated by the magnetic field of the magnet arrangement (100), comprising at least one cylindrical and elongated induction coil (4) which surrounds the magnet arrangement (100) at least in sections,
- a bearing device for supporting the magnet arrangement (100) movable relative to the housing (7), comprising both spring and damping and linear guide functionality, **characterized in that** a respective end face of the radially magnetized magnet is formed complementary to a respectively assigned axial end face of the pole device in such a way that no air gap exists between the pole device and the magnet and the pole device and the magnet abut each other while contacting each other, wherein the two-part pole device surrounds the radially magnetized magnet perpendicular to the coil axis for coupling the radially magnetized magnet with the induction coil (4) and for homogenization of the magnetic flux density in the induction coil (4), and wherein the holding device (9) has at least three fastening sections for its attachment to the housing (7), which fastening sections comprise fastening webs (42a, b, c) arranged radially on the outside of the induction coil (4) and offset by 120° in each case, and the bearing device for mounting the magnet arrangement (100) movable relative to the housing (7) comprises at least two single-layer or double-layer planar spring elements (10a, b), which each have at least two radially or axially extending spring arms and/or partial spring arms connected by webs for providing a high transverse rigidity of the mounting, and an electronic open loop or closed loop control (82), which is designed to set or control the longitudinal stiffness in the deflection of the vibration system consisting of magnet arrangement (100), spring elements (10a, b) and housing (7).

3. Electrodynamic energy converter according to claim 1 or 2, **characterized in that** the pole device is designed in the manner of a pole shoe (3) as a magnetic lens which is set up to receive magnetic fluxes of the two axially magnetized magnets (1, 2) acting in opposite poles and arranged with the same pole on the end face or to receive magnetic fluxes of the one radially magnetized magnet, to amplify, homogenize and deflect the magnetic flux in a direction perpendicular to the axis of the induction coil (4) and to couple it into the induction coil (4).

4. Electrodynamic energy converter according to claim 1 or 3, **characterized in that** the pole device is of rotationally symmetrical design having a lateral surface and two axially spaced end faces each facing one of the two axially magnetized magnets (1, 2), wherein perpendicular to the axis of rotation the respective end face height of the pole device increases continuously with the radial distance to the axis starting from the axis of rotation)

5. Electrodynamic energy converter according to claim 2 or 3, **characterized in that** the pole device is constructed axially in two parts, both pole parts being symmetrical about an axis of rotation (and identical) with circular axial end faces having different radii, and both pole parts being aligned coaxially with each other and abutting each other with their two axial end faces with a smaller radius in contact with each other, and the radially magnetized magnet being arranged coaxially with the pole parts and having an axial passage for receiving the two pole parts in sections (and without an air gap).

6. Electrodynamic energy converter according to any one of claims 1 to 4, **characterized in that**, for providing a magnetic yoke, the magnet arrangement (100) comprises a closed pot (8) of ferromagnetic material comprising a lid portion (92), a bottom portion (93) and a lateral surface portion (94), the pot (7) completely accommodating the magnets (1, 2), the at least one induction coil (4) and the pole device and being locally perforated solely by the at least three upright mounting webs (42a, b, c) of the induction coil (4).

7. Electrodynamic energy converter according to any one of the preceding claims, **characterized in that** the bearing device of the magnetic arrangement (100) movable relative to the housing (7) comprises spring elements (10a, b) each arranged endwise to the magnet arrangement (100) which, for increasing the transverse stiffness, have a double-arm structure or a labyrinth structure and each of which may integrally comprise a second spring in the form of a bump stop suitable to cushion strong impacts.

8. Electrodynamic energy converter according to claim 7, **characterized in that** the electronic open loop or closed loop control (82) detects the instantaneous value of the payload impedance.

9. Electrodynamic energy converter according to any one of the preceding claims, **characterized in that** the electronic open loop or closed loop control (82) is designed and configured to control the vibration amplitude of the magnetic arrangement (100) in an open or closed loop **in that**, in response to changes in external ambient and operating conditions, in particular in response to changes in ambient temperature, excitation amplitude and excitation frequency, the load impedance can be adapted overall in order to maintain a vibration quality Q which is permanently or temporarily permissible by design under these external ambient and operating conditions, in particular by the electronic closed loop control outputting an adequate reference variable or by the electronic open loop control outputting an adjusted electrical load for adapting vibration amplitudes to the ambient and operating conditions.

10. Electronic energy converter according to any one of the preceding claims, **characterized in that** the electronic open loop or closed loop control (82) has at least two operating modes with different vibration quality ranges (Q1) and (Q2), a first operating mode providing a first vibration quality range, which limits the vibration amplitude of the magnet arrangement (100) to a mean value which is permanently permissible by design, and a second operating mode providing a second, higher vibration quality range (Q2) allowing a vibration amplitude which is higher than in the first operating range and which is above the permanently permissible mean vibration amplitude and below the instantaneous amplitude admissible by design.

11. Electrodynamic energy converter according to claim 10, **characterized in that** the electronic open loop or closed loop control (82) is configured to monitor at least one operating or ambient parameter such as the excitation amplitude of the energy converter and when a design-permissible limit value of the at least one operating or ambient parameter is exceeded executes a third operating mode in which a third vibration quality range (Q3) is adjusted or controlled which is smaller than the first and the second vibration quality range for maximum possible damping of the vibration amplitude of the magnet arrangement (100) for the purpose of minimizing the vibration amplitude of the magnet arrangement and for visual and/or audible indication of the exceeding of the value of the at least one operating or ambient parameter specified as permissible, activates an indicating device and/or otherwise signals to the outside and/or stores the information about the exceeding of the at least one operating or environmental parameter.

12. Electrodynamical energy converter according to any one of the preceding claims, **characterized in that** the electronic open loop or closed loop control (82) includes a circuit for open loop or closed loop control of the vibration quality, which circuit is designed for the low-loss lowering of the output voltage of this circuit as a function of the determined instantaneous value of the load impedance (1211/1307).

13. Electrodynamical energy converter according to any one of the preceding claims, **characterized in that** the energy converter, for generating an analog signal proportional to the velocity of the magnet arrangement (100), comprises a sensor magnet (84) attached to a spring element (10a/10b) and a magnetic loop antenna (83) for detecting the magnetic field of the sensor magnets (84) and for outputting the analog signal.

14. Electrodynamic energy converter according to any one of the preceding claims, **characterized in that** the induction coil (4) of the energy converter comprises a separate, load-currentless second winding, an additional winding tap or a voltage divider device associated with it, which is designed for outputting a signal in the form of an analog voltage that represents a measure for the velocity of the magnet arrangement (100) and/or the spring elements (10a, b) attached to it.

15. Electrodynamic energy converter according to claim 13 or 14, **characterized in that** the electronic open loop or closed loop control (82) is configured to process electronically, in particular integrate, the velocity-proportional analog signal to form a linear, analog amplitude or displacement-proportional voltage signal.

## Revendications

1. Convertisseur électrodynamique d'énergie pour convertir l'énergie cinétique mécanique en énergie électrique, comprenant :
- un boîtier (7),
- un agencement magnétique (100) montés pour être déplacés par rapport au boîtier (7) pour fournir un champ magnétique avec au moins deux aimants coaxiaux et espacés (1, 2) alignés l'un par rapport à l'autre et magnétisés axialement, dans lequel les deux aimants (1, 2) sont disposés avec la même polarité sur leurs faces frontales et un dispositif de pôle magnétique comprenant un matériau magnétiquement conducteur est disposé entre les aimants espacés,
- un ensemble de bobines disposé de manière fixe par rapport au boîtier (7) au moyen d'un dispositif de maintien (9) et pénétré par le champ magnétique de l'agencement magnétique (100), comprenant au moins une bobine d'induction cylindrique et allongée (4) qui entoure l'agencement magnétique (100) au moins en sections,
- un dispositif de support pour supporter l'agencement magnétique (100) mobile par rapport au boîtier (7), comprenant à la fois une fonctionnalité de ressort et d'amortissement ainsi que de guidage linéaire,
dans lequel une face frontale respective de ces deux aimants à magnétisation axiale (1, 2) est formée en complément d'une face frontale respectivement associée du dispositif de pôle de manière à ce qu'il n'y ait pas d'espace d'air entre le dispositif de pôle et les aimants (1, 2) et que le dispositif de pôle et les aimants (1, 2) s'appuient l'un sur l'autre tout en se contactant, dans lequel le dispositif de pôle entoure les deux aimants à magnétisation axiale (1, 2) dans une direction parallèle à l'axe de la bobine pour coupler les deux aimants à magnétisation axiale (1, 2) avec la bobine d'induction (4) et pour homogénéiser la densité du flux magnétique dans la bobine d'induction (4), et dans lequel le dispositif de maintien (9) comporte au moins trois sections de fixation pour son attachement au boîtier (7), ces sections de fixation comprennent des barrettes de fixation (42a, b, c) disposées radialement à l'extérieur de la bobine d'induction (4) et décalées chacune de 120°, et le dispositif de support pour supporter l'agencement magnétique (100) mobile par rapport au boîtier (7) comprend au moins deux éléments de ressort planaires (10a, b) à une ou deux couches, ressorts planaires qui présentent chacun au moins deux bras de ressort s'étendant radialement ou axialement et/ou des bras de ressort partiels reliés par des barrettes pour fournir une rigidité transversale élevée du support, et une dispositif de commande électronique en boucle ouverte ou fermée (82), qui est conçu pour contrôler ou régler la rigidité longitudinale dans l'excursion du système oscillant composé de l'agencement magnétique (100), des éléments de ressort (10a, b) et du boîtier (7).

2. Convertisseur d'énergie électrodynamique pour convertir l'énergie cinétique mécanique en énergie électrique, comprenant :
- un boîtier (7),
- un agencement magnétique (100) monté pour être déplacé par rapport au boîtier (7) afin de fournir un champ magnétique avec un aimant magnétisé radialement avec des faces frontales axiales, dans lequel l'aimant est spatialement entouré par un dispositif polaire magnétique en plusieurs parties à partir d'un matériau magnétiquement conducteur aligné coaxialement avec ledit au moins un aimant,
- un ensemble de bobines disposé de manière fixe par rapport au boîtier (7) au moyen d'un dispositif de maintien (9) et pénétré par le champ magnétique de l'agencement magnétique (100), comprenant au moins une bobine d'induction (4) cylindrique et allongée qui entoure l'agencement magnétique (100) au moins en sections,
- un dispositif de support pour supporter l'agencement magnétique (100) mobile par rapport au boîtier (7), comprenant à la fois une fonctionnalité de ressort et d'amortissement et de guidage linéaire, **caractérisé en ce qu'**une face frontale respective de l'aimant radialement magnétisé est formée en complément d'une face frontale axiale respectivement associée du dispositif de pôle de telle sorte qu'aucun espace d'air n'existe entre le dispositif de pôle et l'aimant et que le dispositif de pôle et l'aimant s'appuient l'un sur l'autre tout en se contactant, dans lequel le dispositif de pôle en deux parties entoure l'aimant radialement magnétisé perpendiculairement à l'axe de la bobine pour coupler l'aimant radialement magnétisé avec la bobine d'induction (4) et pour homogénéiser la densité du flux magnétique dans la bobine d'induction (4), et dans lequel le dispositif de maintien (9) comporte au moins trois sections de fixation pour son attachement au boîtier (7), ces sections de fixation comprennent des barrettes de fixation (42a, b, c) disposées radialement à l'extérieur de la bobine d'induction (4) et chacune décalées de 120°, et le dispositif de support pour supporter l'agencement magnétique (100) mobile par rapport au boîtier (7) comprend au moins deux éléments de ressort planaires à une ou deux couches (10a, b), qui comportent chacun au moins deux bras de ressort s'étendant radialement ou axialement et/ou des bras de ressort partiels reliés par des barrettes pour fournir une rigidité transversale élevée du support, et un dispositif de commande électronique en boucle ouverte ou fermée (82), conçu pour régler ou contrôler la rigidité longitudinale dans l'excursion du système oscillant composé de l'agencement magnétique (100), des éléments de ressort (10a, b) et du boîtier (7).

3. Convertisseur d'énergie électrodynamique selon la revendication 1 ou 2, **caractérisé en ce que** le dispositif de pôle est conçu à la manière d'une pièce polaire (3) comme une lentille magnétique destinée à recevoir les flux magnétiques des deux aimants à magnétisation axiale (1, 2) agissant dans des pôles opposés et disposés avec le même pôle sur la face frontale ou pour recevoir les flux magnétiques de l'aimant à magnétisation radiale, pour amplifier, homogénéiser et dévier le flux magnétique dans une direction perpendiculaire à l'axe de la bobine d'induction (4) et pour le coupler dans la bobine d'induction (4).

4. Convertisseur d'énergie électrodynamique selon la revendication 1 ou 3, **caractérisé en ce que** le dispositif de pôle est d'une conception à symétrie de rotation ayant une surface latérale et deux faces frontales axialement espacées faisant chacune face à l'un des deux aimants magnétisés axialement (1, 2), dans lequel perpendiculairement à l'axe de rotation la hauteur de la face frontale respective du dispositif de pôle augmente continuellement avec la distance radiale à l'axe à partir de l'axe de rotation)

5. Convertisseur d'énergie électrodynamique selon la revendication 2 ou 3, **caractérisé en ce que** le dispositif de pôle est construit axialement en deux parties, les deux parties polaires étant symétriques par rapport à un axe de rotation (et identiques) avec des faces frontales axiales circulaires ayant des rayons différents, et les deux parties polaires étant alignées coaxialement l'une avec l'autre et s'appuyant l'une contre l'autre avec leurs deux faces frontales axiales ayant un rayon plus petit en contactant l'une avec l'autre, et l'aimant magnétisé radialement étant disposé coaxialement avec les parties polaires et ayant un passage axial pour recevoir les deux parties polaires en sections (et sans un entrefer).

6. Convertisseur d'énergie électrodynamique selon l'une quelconque des revendications 1 à 4, **caractérisé en ce que**, pour fournir une culasse magnétique, l'agencement magnétique (100) comprend un pot fermé (8) en matériau ferromagnétique comprenant une partie de couvercle (92), une partie de fond (93) et une partie de surface latérale (94), le pot (7) accueillant complètement les aimants (1, 2), au moins une bobine d'induction (4) et le dispositif de pôle et étant localement perforé uniquement par lesdites au moins trois barrettes de fixation verticales (42a, b, c) de la bobine d'induction (4).

7. Convertisseur d'énergie électrodynamique selon l'une quelconque des revendications précédentes, **caractérisé en ce que** le dispositif de support de l'agencement magnétique (100) mobile par rapport au boîtier (7) comprend des éléments de ressort (10a, b) disposés chacun dans le sens de l'agencement magnétique (100) qui, pour augmenter la rigidité transversale, ont une structure à double bras ou une structure en labyrinthe et dont chacun peut comprendre intégralement un deuxième ressort sous la forme d'un butoir adapté pour amortir les chocs violents.

8. Convertisseur d'énergie électrodynamique selon la revendication 7, **caractérisé en ce que** le dispositif de commande électronique en boucle ouverte ou fermée (82) détecte la valeur instantanée de l'impédance de la charge utile.

9. Convertisseur d'énergie électrodynamique selon l'une quelconque des revendications précédentes, **caractérisé en ce que** le dispositif de commande électronique en boucle ouverte ou fermée (82) est conçue et configurée pour contrôler ou régler l'amplitude de vibration de l'agencement magnétique (100) de telle manière que, en réponse à des changements dans les conditions ambiantes et de fonctionnement externes, en particulier en réponse à des changements dans la température ambiante, l'amplitude d'excitation et la fréquence d'excitation, l'impédance de la charge peut être peut être adaptée globalement afin de maintenir une qualité de vibration Q qui est permise en permanence ou temporairement par la conception dans ces conditions ambiantes et de fonctionnement externes, en particulier par le dispositif de commande électronique en boucle fermée émettant une variable de référence adéquate ou par le dispositif de commande électronique en boucle ouverte émettant une charge électrique ajustée pour adapter les amplitudes de vibration aux conditions ambiantes et de fonctionnement.

10. Convertisseur d'énergie électronique selon l'une quelconque des revendications précédentes, **caractérisé en ce que** le dispositif de commande électronique en boucle ouverte ou fermée (82) a au moins deux modes de fonctionnement avec des gammes de qualité de vibration différentes (Q1) et (Q2), un premier mode de fonctionnement fournissant une première gamme de qualité de vibration (Q1), qui limite l'amplitude de vibration de l'agencement magnétique (100) à une valeur moyenne qui est permise en permanence par la conception, et un deuxième mode de fonctionnement fournissant une deuxième gamme de qualité de vibration plus élevée (Q2) permettant une amplitude de vibration qui est plus élevée que dans la première gamme de fonctionnement et qui est supérieure à l'amplitude de vibration moyenne permise en permanence et inférieure à l'amplitude instantanée permise par la conception.

11. Convertisseur d'énergie électrodynamique selon la revendication 10, **caractérisé en ce que** le dispositif de commande électronique en boucle ouverte ou fermée (82) est configuré pour surveiller au moins un paramètre de fonctionnement ou environnemental tel que l'amplitude d'excitation du convertisseur d'énergie en cas des dépassement d'une valeur limite admissible par la conception dudit au moins un paramètre de fonctionnement ou environnemental exécute un troisième mode de fonctionnement dans lequel une troisième gamme de qualité de vibration (Q3) est ajustée ou contrôlée, qui est plus petite que la première et la deuxième gamme de qualité de vibration, afin d'amortir au maximum l'amplitude de vibration de l'agencement magnétique (100) dans le but de minimiser l'amplitude de vibration de l'agencement magnétique et commande un dispositif d'indication pour indiquer visuellement et/ou auditivement le dépassement de la valeur d'au moins un paramètre de fonctionnement ou environnemental spécifié comme étant admissible, et/ou le signale d'une autre manière à l'extérieur et/ou stocke l'information sur le dépassement de la valeur d'au moins un paramètre de fonctionnement ou environnemental.

12. Convertisseur d'énergie électrodynamique selon l'une quelconque des revendications précédentes, **caractérisé en ce que** le dispositif de commande électronique en boucle ouverte ou fermée (82) comporte un circuit de commande en boucle ouverte ou fermée de la qualité de vibration, lequel circuit est conçu pour l'abaissement à faible perte de la tension de sortie de ce circuit en fonction de la valeur instantanée déterminée de l'impédance de charge (1211/1307).

13. Convertisseur d'énergie électrodynamique selon l'une quelconque des revendications précédentes, **caractérisé en ce que** le convertisseur d'énergie, pour générer un signal analogique proportionnel à la vitesse de l'arrangement magnétique (100), comprend un aimant capteur (84) fixé à un élément de ressort (10a/10b) et une antenne à boucle magnétique (83) pour détecter le champ magnétique des aimants capteurs (84) et pour émettre le signal analogique.

14. Convertisseur d'énergie électrodynamique selon l'une quelconque des revendications précédentes, **caractérisé en ce que** la bobine d'induction (4) du convertisseur d'énergie comprend un deuxième bobinage séparé, sans courant de charge, une prise de bobinage supplémentaire ou un dispositif de diviseur de tension associé, qui est conçu pour émettre un signal sous la forme d'une tension analogique qui représente une mesure de la vitesse de l'arrangement magnétique (100) et/ou des éléments de ressort (10a, b) qui lui sont attachés.

15. Convertisseur d'énergie électrodynamique selon la revendication 13 ou 14, **caractérisé en ce que** le dispositif de commande électronique en boucle ouverte ou fermée (82) est configurée pour traiter électroniquement, en particulier intégrer, le signal analogique proportionnel à la vitesse pour former un signal de tension linéaire, d'amplitude analogique ou proportionnel au déplacement
